(19) Europäisches Patentamt
European Patent Office
Office européen des brevets

(11) **EP 3 634 689 B1**

(12) **EUROPÄISCHE PATENTSCHRIFT**

(45) Veröffentlichungstag und Bekanntmachung des Hinweises auf die Patenterteilung:
**24.08.2022 Patentblatt 2022/34**

(21) Anmeldenummer: **18749815.9**

(22) Anmeldetag: **09.08.2018**

(51) Internationale Patentklassifikation (IPC):
**B23K 26/38** *(2014.01)* **B23K 26/70** *(2014.01)*
**G05B 19/4061** *(2006.01)*

(52) Gemeinsame Patentklassifikation (CPC):
**B23K 26/38; B23K 26/70;** G05B 19/4061

(86) Internationale Anmeldenummer:
**PCT/EP2018/071697**

(87) Internationale Veröffentlichungsnummer:
**WO 2018/224697 (13.12.2018 Gazette 2018/50)**

(54) **VERFAHREN ZUR STEUERUNG EINER STRAHLSCHNEIDVORRICHTUNG MIT EINEM SCHNEIDWERKZEUG, EIN COMPUTERIMPLEMENTIERTES VERFAHREN ZUM AUTOMATISCHEN BESTIMMEN UND ERZEUGEN VON BEWEGUNGSBEFEHLEN ZUM STEUERN EINES SCHNEIDWERKZEUGS EINER STRAHLSCHNEIDVORRICHTUNG, SOWIE STRAHLSCHNEIDVORRICHTUNG ZUM AUSFUEHREN DER VERFAHREN**

METHOD FOR CONTROLLING A JET/BEAM CUTTING DEVICE HAVING A CUTTING TOOL, A COMPUTER-IMPLEMENTED METHOD FOR THE AUTOMATIC DETERMINATION AND GENERATION OF MOVEMENT COMMANDS FOR CONTROLLING A CUTTING TOOL OF A JET/BEAM CUTTING DEVICE, AND JET/BEAM CUTTING DEVICE FOR CARRYING OUT SAID METHOD

PROCÉDÉ DE COMMANDE D'UN DISPOSITIF DE DÉCOUPE AU JET COMPRENANT UN OUTIL DE DÉCOUPE, PROCÉDÉ MIS EN OEUVRE PAR ORDINATEUR POUR DÉTERMINER ET GÉNÉRER AUTOMATIQUEMENT DES INSTRUCTIONS DE DÉPLACEMENT DESTINÉES À COMMANDER UN OUTIL DE DÉCOUPE D'UN DISPOSITIF DE DÉCOUPE AU JET, ET DISPOSITIF DE DÉCOUPE AU JET DESTINÉ À METTRE EN OEUVRE LE PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.06.2017 PCT/IB2017/053430**

(43) Veröffentlichungstag der Anmeldung:
**15.04.2020 Patentblatt 2020/16**

(73) Patentinhaber: **Bystronic Laser AG 3362 Niederönz (CH)**

(72) Erfinder: **BADER, Roland 4933 Ruetschelen (CH)**

(74) Vertreter: **Patentanwälte Geyer, Fehners & Partner mbB Perhamerstrasse 31 80687 München (DE)**

(56) Entgegenhaltungen:
**EP-A1- 3 159 093 DE-A1-102012 212 566**
**DE-B3-102014 200 208 US-B2- 9 031 688**

Bemerkungen:
Die Wiederherstellung des Prioritätsrechts durch das Anmeldeamt ist vor dem EPA wirksam (R. 49ter.1 a) PCT).

**Beschreibung**

Die Erfindung betrifft ein Verfahren zur Steuerung einer Strahlschneidvorrichtung mit einem Schneidwerkzeug nach dem Anspruch 1. Weiter betrifft die Erfindung ein computerimplementiertes Verfahren zum automatischen Bestimmen und Erzeugen von Bewegungsbefehlen zum Steuern eines Schneidwerkzeugs einer Strahlschneidvorrichtung nach dem Anspruch 27, sowie eine Strahlschneidvorrichtung zum Ausführen der Verfahren nach Anspruch 29.

In industriellen Strahlschneidvorrichtungen, beispielsweise Laserstrahlschneidvorrichtungen oder andere Fluidstrahlschneidvorrichtungen insbesondere Flachbettschneidvorrichtungen werden Werkstückteile unterschiedlicher Grösse und Form aus Werkstücken, beispielsweise Blechtafeln, ausgeschnitten. Dabei kommt es insbesondere bei dünneren Blechen häufig vor, dass die auf einer Werkstückauflage positionierten Werkstückteile (bzw. Schneidobjekte) nach dem Freischnitt verkippen und im weiteren Schneidvorgang mit dem Schneidkopf kollidieren. Dies führt zu Produktionsausschuss und Beschädigungen am Schneidkopf. Problematisch sind hauptsächlich Werkstückteile von kleinerer bis mittlerer Abmessung (50-400 mm Länge) und dünner bis mittlerer Werkstückdicke (bis zu 8 mm Dicke), sowie Werkstückteile, die grössere Innenkonturen oder eine komplexe Aussenkontur aufweisen.

Um die Wahrscheinlichkeit einer Beschädigung in der Strahlschneidvorrichtung zu minimieren, gibt es Strahlschneidvorrichtungen, welche mithilfe einer Sensorik aktiv die Kollision des Schneidkopfs mit dem verkippten Werkstückteil erkennen und den Positionierungsweg des Schneidkopfs so ändern, dass teure Beschädigungen am Schneidkopf und an der Strahlschneidvorrichtung verhindert werden.

Nachteilig an dieser bekannten Lösung ist, dass ein Verschieben des Werkstücks erfolgt und/oder eine Intervention eines Benutzers der Strahlschneidvorrichtung notwendig ist. Darüber hinaus ist es nicht auszuschliessen, dass der Schneidkopf trotzdem Schaden nimmt.

Die US 8,455,787 B2 offenbart eine Laserstrahlschneidvorrichtung, wobei ein Werkstück auf einer Werkstückauflage mit mehreren Auflagepunkten positioniert wird. Der Laserstrahl des Laserschneidkopfs wird relativ zum Werkstück bewegt und schneidet dabei die Werkstückteile aus dem Werkstück. Die Laserstrahlschneidvorrichtung umfasst eine Bewertungseinheit, welche bei bekannter Werkstückauflage und bekannten zu schneidenden Werkstückteil das Verkippen des Werkstückteils bewertet. Um ein anschliessendes Kollidieren des Schneidkopfs mit einem verkippten Werkstückteil zu verhindern, wird der Schneidkopf vertikal bzw. horizontal neu positioniert.

Nachteilig an dieser bekannten Lösung ist, dass das Verkippen des geschnittenen Werkstückteils aus dem Werkstück nicht verhindert wird. Dies hat zu Folge, dass der Schneidkopf mehrmals neu positioniert werden muss und der Positionierungsweg des Schneidkopfs und somit die Schneidprozessdauer dadurch verlängert wird.

Die US 9,031,688 B2 offenbart eine Vorrichtung zum Erstellen eines Schachtelungsplans für ein auf einer Strahlschneidvorrichtung platziertes Werkstück, wobei die Werkstückauflage berücksichtigt wird. Dabei wird die geometrische Anordnung der aus dem Werkstück herauszutrennenden Werkstückteile unter Berücksichtigung der Auflagepunkte der Werkstückauflage und der Werkstückteilschwerpunkte iterativ so bestimmt, dass die Auflagestabilität aller Werkstückteile möglichst maximal wird.

Nachteilig an dieser bekannten Lösung ist, dass die Position der Auflagepunkte relativ zum Werkstück vor dem Erstellen des Schachtelungsplans bekannt sein muss. Dies ist bei heute gängigen Beladesystemen für Werkstücke auf die Werkstückauflage nicht möglich. Da das Erstellen des Schachtelungsplans eine lange Rechenzeit benötigt, ist das Verfahren auf heute gängigen Anlagen nicht praktikabel. Zudem wird zur Beurteilung der Stabilität nur der Schwerpunkt der Werkstückteile herangezogen, wodurch sich nur die statische Auflagestabilität von kleinen Teilen verbessern lässt, da nur kleine Teile statisch instabil auf der Werkstückauflage aufliegen können.

Die DE 10 2014 200 208 B3 (Grundlage für den Oberbegriff des Anspruchs 1) Z zeigt ein Verfahren zur trennenden Bearbeitung eines Werkstücks mit einer Strahlschneidvorrichtung. Es wird vor dem Bearbeitungsprozess eine Sicherheitszone um das zu trennende Werkstückteil definiert, welche die Kollision des getrennten und verkippten Werkstückteils mit dem Schneidkopf der Strahlschneidvorrichtung verhindert. Dabei wird die Verkippungshöhe des getrennten Werkstückteils berechnet und daraus die Sicherheitszone um das zu trennende Werkstückteil definiert. Weiter werden Halteteile für jedes zu trennende Werkstückteil am Werkstück ausgewählt und die Bearbeitungsreihenfolge der Werkstückteile mittels der Halteteile bestimmt.

Nachteilig an der bekannten Lösung ist, dass die getrennten Werkstückteile nach dem Freischnitt verkippen und somit die Bearbeitungsprozesswege des Schneidkopfs bei einem komplexen Schneidplan verlängert wird.

Die WO 2016/020411 A1 offenbart einen Prozess zur trennenden Bearbeitung eines Werkstückteils mit einem Schneidstrahl und einem Arbeitsgasstrahl. Das Werkstück wird auf einer Werkstückauflage positioniert und vom Schneidstrahl freigeschnitten. Dabei wirkt der Gasdruck des Schneidstrahls auf die Schneidkontur des Werkstückteils und würde selbst bei einem statisch stabilen Werkstückteil ein Verkippen nach dem Freischnitt verursachen. Um das Verkippen zu verhindern, wird der Schneidkopf in einem zweiphasigen Verfahrschritt gezielt wegpositioniert, wobei aus der Druckzone des Schneidgasstrahls herausgefahren und in eine Gassogzone neben der Düsenbohrung hineingefahren wird. Dadurch wird der auf das geschnittene Teil wirkende Druckimpuls minimiert, welche aufgrund des Abschaltens des Schneidstrahls am Freischnittpunkt wirkt, ein Verkippen des getrennten Werkstückteils verhindern soll.

Nachteilig an der bekannten Lösung ist, dass die Wirkung des Gassogs sehr klein ist und dadurch bereits bei leicht grösseren Abständen der Auflagepunkte bzw. der Auflagelinien der Werkstückauflage das Verkippen des getrennten Werkstückteils nicht verhindert wird.

Aufgabe der vorliegenden Erfindung ist es somit, Verfahren zur Steuerung einer Strahlschneidvorrichtung mit einem Schneidwerkzeug zu schaffen, welches die vorgenannten Nachteile nicht aufweist und insbesondere ein Verfahren zu schaffen, welches das Verkippen von herauszutrennenden Werkstückteilen auf der Werkstückauflage nach deren Freischneiden effektiv verhindert. Weiter ist es die Aufgabe der Erfindung ein computerimplementiertes Verfahren zum automatischen Bestimmen und Erzeugen von Bewegungsbefehlen zum Steuern eines Schneidwerkzeugs einer Strahlschneidvorrichtung zu schaffen, sowie eine Strahlschneidvorrichtung zum Ausführen der Verfahren zu schaffen.

Die Aufgabe wird durch die Merkmale der unabhängigen Ansprüche gelöst. Vorteilhafte Weiterbildungen sind in den Figuren und in den abhängigen Patentansprüchen dargelegt.

Das erfindungsgemässe Verfahren zur Steuerung einer Strahlschneidvorrichtung mit einem Schneidwerkzeug mittels dem zumindest ein Werkstückteil aus einem Werkstück entlang einer Schneidkontur heraustrennbar ist, wobei die Strahlschneidvorrichtung eine Werkstückauflage mit einer Mehrzahl an Auflagepunkten zur Aufnahme eines Werkstücks aufweist, ist durch folgende Schritte gekennzeichnet:

Festlegen zumindest eines Schneidplans für das Werkstück mit wenigstens einer Schneidkontur für zumindest ein, aus dem Werkstück herauszutrennenden Werkstückteil (Schritt a)).

Anschliessend erfolgt das Ermitteln der relativen Lage und/oder Ausrichtung des Werkstücks und des Schneidplans und des zumindest einen herauszutrennenden Werkstückteils in Bezug auf die Werkstückauflage (Schritt b)).

Alternativ oder ergänzend erfolgt das Ermitteln der relativen Lage und/oder Ausrichtung des Werkstücks oder des Schneidplans oder des zumindest einen herauszutrennenden Werkstückteils in Bezug auf die Werkstückauflage (Schritt b)).

Weiter alternativ oder ergänzend erfolgt das Ermitteln der relativen Lage und/oder Ausrichtung des Werkstücks und des Schneidplans in Bezug auf die Werkstückauflage (Schritt b)).

Weiter alternativ oder ergänzend erfolgt das Ermitteln der relativen Lage und/oder Ausrichtung des Werkstücks und des zumindest einen herauszutrennenden Werkstückteils in Bezug auf die Werkstückauflage (Schritt b)).

Weiter alternativ oder ergänzend erfolgt das Ermitteln der relativen Lage und/oder Ausrichtung des Schneidplans und des zumindest einen herauszutrennenden Werkstückteils in Bezug auf die Werkstückauflage (Schritt b) ).

Anschliessend erfolgt das Ermitteln der relativen Position des zumindest einen Auflagepunkts der Werkstückauflage, unterhalb des zumindest einen herauszutrennenden Werkstückteils (Schritt c)).

Alternativ oder ergänzend erfolgt das Ermitteln der Anzahl der Auflagepunkte der Werkstückauflage, unterhalb des zumindest einen herauszutrennenden Werkstückteils, bzw. der Auflagepunkte die einem Werkstückteil bzw. Schneidobjekt zugeordnet sind.

Daraufhin erfolgt das Ermitteln von zumindest einem Risikobereich an der Schneidkontur des zumindest einen herauszutrennenden Werkstückteils, bei welchem, bei einem Freischneiden des herauszutrennenden Werkstückteils in diesem Risikobereich ein Kippen des zumindest einen herauszutrennenden Werkstückteils möglich ist (Schritt d)). Hierbei werden die für ein Verkippen des Werkstücks nach dem Heraustrennen wesentlichen Faktoren beachtet.

Weiter erfolgt das Bestimmen zumindest eines Anschnittpunkts für das Schneidwerkzeug an der Schneidkontur des zumindest einen herauszutrennenden Werkstückteils, unter Berücksichtigung des zumindest einen erkannten Risikobereichs an der Schneidkontur des zumindest einen herauszutrennenden Werkstückteils (Schritt e)).

Alternativ oder ergänzend erfolgt das Bestimmen zumindest eines Freischnittpunkts für das Schneidwerkzeug an der Schneidkontur des zumindest einen herauszutrennenden Werkstückteils, unter Berücksichtigung des zumindest einen erkannten Risikobereichs an der Schneidkontur des zumindest einen herauszutrennenden Werkstückteils (Schritt e)).

Mit diesem Verfahren in allen der genannten Varianten, ist der Anschnittpunkt bzw. der Freischnittpunkt am zumindest einen herauszutrennenden Werkstückteil so auswählbar, dass beim Freischneiden bzw. Heraustrennen des zumindest einen herauszutrennenden Werkstückteils, also bei dem Schneidobjekt, ein Kippen des zumindest einen herauszutrennenden Werkstückteils bzw. Schneidobjekts unterbunden wird. Da der zumindest eine bestimmte Anschnittpunkt bzw. der zumindest eine bestimmte Freischnittpunkt vom zuvor ermittelten zumindest einen Risikobereich abhängig ist bzw. dieser berücksichtigt wird, ist ein vorab definierter Schneidplan schnell mit dem Schneidwerkzeug der Strahlschneidvorrichtung schneidbar, ohne dass das Schneidwerkzeug von einem gekippten herauszutrennenden Werkstückteil beschädigt wird. Es versteht sich, dass Risikobereiche für jedes herauszutrennende Werkstückteil bestimmt und bei der Festlegung der jeweiligen Anschnittpunkte bzw. der Freischnittpunkte berücksichtigt werden können. Zudem können die geschnittenen herauszutrennenden Werkstückteile problemlos mit einer gängigen automatischen Entladevorrichtung entnommen werden, ohne dass dabei die herauszutrennenden Werkstückteile beschädigt, verbogen oder zerkratzt werden. Somit ist jeder noch so komplexe Schneidprozess unterbrechungsfrei und ohne Ausschuss von herauszutrennenden Werkstückteilen oder vom gesamten Werkstück durchführbar und deshalb kostengünstig ausführbar.

Die beschriebenen Varianten in den genannten Verfahrensschritten sind innerhalb eines Verfahrensschritts optional anzuwenden und verfahrensschrittübergreifend beliebig kombinierbar.

Ein Schneidplan umfasst zumindest ein herauszutrennendes Werkstückteil im Werkstück, welches vom Schneidwerkzeug der Strahlschneidvorrichtung aus dem Werkstück herauszutrennen ist. Das herauszutrennende Werkstückteil wird dabei von einer Schneidkontur eingefasst. Der Schneidplan wird vor dem Anschnitt des zumindest einen herauszutrennenden Werkstückteils am Werkstück erzeugt, beispielsweise über eine geeignete Softwareapplikation in einem Computer.

Bei mehreren herauszutrennenden Werkstückteilen im Werkstück sind mehrere Schneidreihenfolgen der herauszutrennenden Werkstückteile im Schneidplan möglich, welche alle vorab mit diesem Verfahren zur Steuerung einer Strahlschneidvorrichtung mit einem Schneidwerkzeug bestimmbar sind.

Die Schneidkontur des herauszutrennenden Werkstückteils besteht aus einer Mehrzahl von Schneidkonturpunkten.

Vorzugsweise werden vor oder während dem Bestimmen zumindest eines Anschnittpunkts und/oder Freischnittpunkts für das Schneidwerkzeug an der Schneidkontur des zumindest einen herauszutrennenden Werkstückteils (Schritt e)), die Koordinaten des zumindest einen bestimmten Anschnittpunkts und/oder Freischnittpunkts in einer Speichereinrichtung gespeichert.

Damit liegt eine grössere Auswahl von Anschnittpunkten bzw. Freischnittpunkten für das Schneidwerkzeug an der Schneidkontur des zumindest einen herauszutrennenden Werkstückteils vor und somit ist der günstigste Anschnittpunkt bzw. Freischnittpunkt für das Schneidwerkzeug der Strahlschneidvorrichtung unter Beachtung des ggf. ermittelten zumindest einen Risikobereichs auswählbar, wobei deren Koordinaten anschliessend für weitere Optimierungsschritte berücksichtigbar sind.

Vorteilhaft werden im Schritt e) mehrere Anschnittpunkte oder mehrere Freischnittpunkte für das Schneidwerkzeug unter Beachtung des ggf. ermittelten zumindest einen Risikobereichs an der Schneidkontur des zumindest einen herauszutrennenden Werkstückteils bestimmt.

Weiter vorteilhaft werden die mehreren Anschnittpunkte oder mehreren Freischnittpunkte unter Berücksichtigung von mehreren zuvor bestimmten Risikobereichen an der Schneidkontur des zumindest einen herauszutrennenden Werkstückteils bestimmt.

Damit wird bei der Auswahl eines geeigneten Anschnittpunkts und/oder Freischnittpunkts vorab ein Kippen des herauszutrennenden Werkstückteils beim Heraustrennen verhindert.

Bevorzugt wird nach dem Schritt e) ein Schneidprozess mit dem Schneidwerkzeug ausgehend von dem zumindest einen bestimmten Anschnittpunkt ausgeführt, wobei der Schneidprozess das Schneiden entlang der Schneidkontur mit dem Schneidwerkzeug umfasst. Damit wird ein präzises Heraustrennen des zumindest einen herauszutrennenden Werkstückteils gewährleistet, ohne dass dieses verkippt und damit störend für die weitere Schneidbearbeitung des Werkstücks sein kann.

Alternativ wird nach dem Schritt e) ein Schneidprozess mit dem Schneidwerkzeug ausgehend von dem zumindest einen Anschnittpunkt entlang der Schneidkontur bis zum Freischnittpunkt des zumindest einen herauszutrennenden Werkstückteils ausgeführt, womit die zuvor angeführten Vorteile gelten und ein Kippen des zumindest einen herauszutrennenden Werkstückteils verhindert wird.

Bevorzugt erfolgt das Schneiden entlang der Schneidkontur des zumindest einen herauszutrennenden Werkstückteils mit dem Schneidwerkzeug bis ein Freischneiden des zumindest einen herauszutrennenden Werkstückteils aus dem Werkstück erwirkt wird, womit der Anschnittpunkt und der Freischnittpunkt identisch sind und ein präzises Schneiden des herauszutrennenden Werkstückteils ermöglicht wird.

Vorteilhaft erfolgt nach dem Schneidprozess des zumindest einen herauszutrennenden Werkstückteils eine Positionierungsbewegung des Schneidkopfs, ausgehend von dem bestimmten Freischnittpunkt.

Vorteilhaft ist der Einstichpunkt des Schneidstrahls des Schneidwerkzeugs vom zumindest einen Anschnittpunkt beabstandet, womit das Werkstückteil von ggf. entstehenden Einstechspritzern und Konturverletzungen weitgehend verschont bleibt. Nach dem Einstechen wird der Schneidstrahl in einer Schneidbewegung, welche der Anschnittkontur entspricht, an die Schneidkontur, d.h. auf den Anschnittpunkt, geführt. Dabei kann, nicht abschliessend aufgezählt, die Anschnittkontur eine Strecke bestimmter Länge, welche unter einem bestimmten Winkel auf die Schneidkontur übergeht, oder eine Strecke bestimmter Länge, gefolgt von einem Übergangsradius auf die Schneidkontur, sein. Es ist aber auch möglich, dass direkt am Anschnittpunkt eingestochen wird, also keine Anschnittkontur verwendet wird.

Im Folgenden wird auf die Erwähnung der Anschnittkontur, als vor dem Anschnittpunkt zu schneidendes Geometrieelement verzichtet, da dieses keinerlei Bedeutung für das Kippverhalten des nachfolgend zu schneidenden Werkstückteils hat.

Vorzugsweise wird eine Bearbeitungskraft an zumindest einem Schneidkonturpunkt der Schneidkontur des zumindest einen herauszutrennenden Werkstückteils bestimmt, welche für die genaue mechanische Berechnung des Kippverhaltens und somit zur Ermittlung des Risikobereichs verwendet werden kann.

Die bestimmte Bearbeitungskraft am zumindest einen Schneidkonturpunkt der Schneidkontur des zumindest einen herauszutrennenden Werkstückteils ist jene Kraft, die aufgrund des Schneidstrahls des Schneidwerkzeugs auf diesen Schneidkonturpunkt der Schneidkontur des herauszutrennenden Werkstückteils beim Freischneiden des zumindest einen herauszutrennenden Werkstückteils tatsächlich wirkt.

Alternativ oder ergänzend wird die Bearbeitungskraft zumindest an einem zum zumindest einen Schneidkonturpunkt benachbarten Schneidkonturpunkt der Schneidkontur bestimmt, insbesondere in Abhängigkeit von der Geometrie der Schneidkontur an diesen Schneidkonturpunkten, womit eine höhere Flexibilität in der Auswahl des Anschnittpunkts bzw. Freischnittpunkts gegeben ist.

Vorteilhaft wird die Bearbeitungskraft in Abhängigkeit von zumindest einem Schneidparameter des Schneidwerkzeugs bestimmt, womit beispielsweise die Bearbeitungskraft des Schneidstrahls nach dem Freischneiden des zumindest einen herauszutrennenden Werkstückteils aus dem Werkstück genau berücksichtigt werden kann.

Weiter vorteilhaft ist der zumindest eine Schneidparameter des Schneidwerkzeugs, welcher zur Bestimmung der Bearbeitungskraft herangezogen werden kann, zumindest ein Schneidwerkzeugparameter, wie ein Schneidgasdruck, ein Düsenabstand, ein Düsendurchmesser, eine Düsenform, womit eine verbesserte Bestimmung der Kippstabilität des zumindest einen herauszutrennenden Werkstückteils ermöglicht wird. Die Erfindung hat erkannt, dass zur Beurteilung der Stabilität nicht nur der Schwerpunkt der Werkstückteile heranzuziehen ist, durch den sich nur die statische Auflagestabilität optimieren lässt, sondern dass es andere zu beachtende Parameter gibt, die einen Einfluss auf die Lagestabilität der Werkstückteile haben und in den bekannten Lösungen nicht berücksichtigt werden. So wurde von der Erfindung erkannt, dass der Prozessgas- bzw. Schneidgasdruck eine erhebliche Kraft auf das Werkstückteil ausübt, die auch bei statisch stabiler Auflage des herauszutrennenden Werkstückteils ein Verkippen unmittelbar nach dem Schneiden verursachen kann. Diese relevanten Schneidparameter, wie insbesondere der Schneidgasdruck werden erfindungsgemäss bei der Bestimmung des Risikobereichs mit einbezogen.

Alternativ oder ergänzend ist der zumindest eine Schneidparameter des Schneidwerkzeugs, welcher zur Bestimmung der Bearbeitungskraft herangezogen werden kann, zumindest ein Positionierungsparameter, wie eine Positionierungsgeschwindigkeit, eine Positionierungsbeschleunigung, eine Positionierungsrichtung, welcher unmittelbar nach dem Freischneiden des herauszutrennenden Werkstückteils der Positionierungsbewegung des Schneidkopfs zugrunde liegt. Die Erfindung hat erkannt, dass auch die Positionierungsparameter unmittelbar nach dem Freischnitt des Werkstückteils für die Bestimmung des Risikobereichs wichtig sein können.

Mit den genannten Schneidwerkzeug- und Positionierungsparametern ist eine genaue Berechnung der Bearbeitungskraft, welche zum Zeitpunkt des Freischneidens wirkt, möglich, wodurch das Kippverhalten des zumindest einen herauszutrennenden Werkstückteils vor der Bearbeitung des Werkstücks und damit die Risikobereiche genau bestimmt werden können.

Vorzugsweise wird nach dem Ermitteln der relativen Position des zumindest einen Auflagepunkts der Werkstückauflage, unterhalb des zumindest einen herauszutrennenden Werkstückteils (Schritt c)), zumindest ein Werkstückteilparameter des zumindest einen herauszutrennenden Werkstückteils ermittelt, womit weiter die genaue Berechnung des Kippverhaltens des zumindest einen herauszutrennenden Werkstückteils ermöglicht wird.

Vorteilhaft wird als zumindest ein Werkstückteilparameter des zumindest einen herauszutrennenden Werkstückteils, der Schwerpunkt des zumindest einen herauszutrennenden Werkstückteils verwendet, womit die Auflagestabilität des zumindest einen herauszutrennenden Werkstückteils einfach bestimmbar ist.

Weiter vorteilhaft wird als zumindest ein Werkstückteilparameter des zumindest einen herauszutrennenden Werkstückteils zumindest eine Schwerelinie des zumindest einen herauszutrennenden Werkstückteils verwendet, womit eine flexiblerer Stabilitätsparameter verwendbar ist.

Weiter vorteilhaft wird als zumindest ein Werkstückteilparameter des zumindest einen herauszutrennenden Werkstückteils die Schneidkonturkrümmung des zumindest einen herauszutrennenden Werkstückteils verwendet, womit in Kombination mit der ermittelten Position von zumindest einem Auflagepunkt der Werkstückauflage, die Kippstabilität des zumindest einen herauszutrennenden Werkstückteils genauer ermittelbar ist.

Alternativ oder ergänzend zur zuvor genannten Ermittlung des zumindest einen Werkstückteilparameters des zumindest einen herauszutrennenden Werkstückteils, erfolgt das Ermitteln zumindest eines Polygonparameters eines Auflagepolygons innerhalb des herauszutrennenden Werkstückteils. Damit wird eine vereinfachte Abbildung der Auflagesituation des zumindest einen herauszutrennenden Werkstückteils erkennbar.

Dabei ist das Auflagepolygon definiert als das konvexe umfassende Polygon aller Auflagepunkte der Werkstückauflage, welche innerhalb des betrachteten herauszutrennenden Werkstückteils liegen.

Vorteilhaft wird als zumindest ein Polygonparameter eines Auflagepolygons, eine Auflagelinie des Auflagepolygons verwendet, womit die Auflagestabilität des zumindest einen herauszutrennenden Werkstückteils besonders einfach bestimmbar ist. Beispielsweise wird eine nächstliegende Auflagelinie oder zusätzlich mindestens eine übernächstliegende Auflagelinie verwendet, womit eine erhöhte Flexibilität im Verfahren ermöglicht wird. Dadurch wird die genaue mechanische Berechnung der Kippneigung der herauszutrennenden Werkstückteile unter Berücksichtigung des Schneidwerkzeugs ermöglicht.

Weiter vorteilhaft wird als zumindest ein Polygonparameter eines Auflagepolygons eine Anzahl von Eckpunkten des Auflagepolygons verwendet, womit eine besonders einfache Bestimmung des zumindest einen Polygonparameter erfolgt.

Anschliessend erfolgt das Bestimmen einer zulässigen Kraft an zumindest einem Schneidkonturpunkt der Schneidkontur des zumindest einen herauszutrennenden Werkstückteils mithilfe des zumindest einen Werkstückteilparameters und der ermittelten Position des zumindest einen Auflagepunkts der Werkstückauflage innerhalb des Werkstücks (Variante 1).

Die zulässige Kraft ist als jene Kraft definiert, bei deren Wirkung auf den jeweiligen Schneidkonturpunkt der Schneidkontur das herauszutrennende Werkstückteil im Moment des Freischneidens verkippt.

Alternativ oder ergänzend erfolgt das Bestimmen der zuvor genannten zulässigen Kraft an zumindest einem Schneidkonturpunkt der Schneidkontur des zumindest einen herauszutrennenden Werkstückteils mithilfe des zumindest einen Polygonparameters und der ermittelten Position des zumindest einen Auflagepunkts der Werkstückauflage innerhalb des Werkstücks (Variante 2 bzw. Variante 3).

In einer weiteren Alternative erfolgt das Bestimmen der zuvor genannten zulässigen Kraft an zumindest einem Schneidkonturpunkt der Schneidkontur des zumindest einen herauszutrennenden Werkstückteils mithilfe des zumindest einen Werkstückteilparameters und zumindest einem Abstand der ermittelten Position des zumindest einen Auflagepunkts der Werkstückauflage innerhalb des Werkstücks zu dem zumindest einen Schneidkonturpunkt der Schneidkontur des zumindest einen herauszutrennenden Werkstückteils (Variante 4).

In einer weiteren Alternative oder ergänzend zur vorgenannten Variante erfolgt das Bestimmen der zulässigen Kraft an zumindest einem Schneidkonturpunkt der Schneidkontur des zumindest einen herauszutrennenden Werkstückteils mithilfe des zumindest einen Polygonparameters und zumindest einem Abstand der ermittelten Position des zumindest einen Auflagepunkts der Werkstückauflage innerhalb des Werkstücks zu dem zumindest einen Schneidkonturpunkt der Schneidkontur des zumindest einen herauszutrennenden Werkstückteils (Variante 5 bzw. Variante 6).

Vorteilhaft erfolgt das Bestimmen der zulässigen Kraft an mehreren Schneidkonturpunkten der Schneidkontur des zumindest einen herauszutrennenden Werkstückteils, womit beispielsweise eine umfassende Bestimmung der zulässigen Kraft an zumindest einer Teilkontur der Schneidkontur vorzugsweise an der gesamten Schneidkontur erfolgt und die Flexibilität im Verfahren erhöht wird.

Vorteilhaft wird der zumindest eine Abstand der ermittelten Position des zumindest einen Auflagepunkts der Werkstückauflage innerhalb des herauszutrennenden Werkstückteils zu dem zumindest einen Schneidkonturpunkt der Schneidkontur des zumindest einen herauszutrennenden Werkstückteils verwendet.

Vorteilhaft erfolgt das Bestimmen der zulässigen Kraft mithilfe des Schwerpunkts und zumindest einer Auflagelinie des Auflagepolygons der ermittelten Position des zumindest einen Auflagepunkts der Werkstückauflage innerhalb des herauszutrennenden Werkstückteils, welche zueinander zumindest einen Abstand aufweisen, sowie zumindest einem Abstand zwischen der zumindest einen Auflagelinie und dem zumindest einen Schneidkonturpunkt der Schneidkontur des zumindest einen herauszutrennenden Werkstückteils, womit eine besonders effektive Bestimmung der zulässigen Kraft möglich ist.

Bevorzugt erfolgt während dem Ermitteln von zumindest einem Risikobereich an der Schneidkontur des zumindest einen herauszutrennenden Werkstückteils (Schritt d)), ein Kräftevergleich der zulässigen Kraft mit zumindest einem zuvor bestimmten Kippkraftschrankenwert an zumindest dem einen Schneidkonturpunkt der Schneidkontur des zumindest einen herauszutrennenden Werkstückteils, womit vor dem Schneiden mit dem Schneidwerkzeug der Strahlschneidvorrichtung Risikobereiche an der Schneidkontur, also Bereiche der Schneidkontur ohne Kippsicherheit beim Freischnitt, und risikofreie Bereiche der Schneidkontur, also Bereiche die eine ausreichende Kippsicherheit aufweisen, bestimmbar sind. Die Kippsicherheit gibt somit dabei für jeden Schneidkonturpunkt der Schneidkontur das Verhältnis von zulässiger Kraft und dem zuvor bestimmten Kippkraftschrankenwert an.

Vorteilhaft erfolgt der Kräftevergleich mit einem Kippkraftschrankenwert, abhängig von der zuvor bestimmten Bearbeitungskraft an zumindest einem der Schneidkonturpunkte der Schneidkontur des zumindest einen herauszutrennenden Werkstückteils, womit vor dem Schneiden mit dem Schneidwerkzeug der Strahlschneidvorrichtung die Kippsicherheit gewährleistet ist.

Weiter vorteilhaft wird die zuvor bestimmte Bearbeitungskraft mit einem Sicherheitsfaktor multipliziert, womit die Kippsicherheit weiter erhöht wird und somit das Verkippen des herauszutrennenden Werkstückteils aus dem Werkstück sicher unterbunden wird.

Vorzugsweise wird der ermittelte zumindest eine Risikobereich an der Schneidkontur des zumindest einen herauszutrennenden Werkstückteils (Schritt d)), auf Basis des Kräftevergleichs bestimmt. Damit lässt sich ein besonders exaktes Ermitteln des zumindest einen Risikobereichs ausführen.

Bevorzugt wird im Kräftevergleich zumindest ein risikoarmer Bereich von Schneidkonturpunkten der Schneidkontur bestimmt, in dem die zulässige Kraft zumindest einen minimalen Kippkraftschrankenwert überschreitet, womit mehrere Anschnittpunkte und/oder Freischnittpunkte in einem Bereich (einer Teilmenge von Schneidkonturpunkten) der Schneidkontur bestimmt werden können, welche nur ein geringes Risiko des Kippens beim Freischneiden aufweisen und in weiterer Folge die Reihenfolge von mehreren zu schneidenden bzw. herauszutrennenden Werkstückteilen optimiert werden kann. Hierbei können ausgewählte Positionierungsparameter des Schneidwerkzeugs berücksichtigt werden.

Alternativ oder ergänzend wird im Kräftevergleich zumindest ein risikofreier Bereich von Schneidkonturpunkten der Schneidkontur bestimmt, in dem die zulässige Kraft zumindest einen maximalen Kippkraftschrankenwert überschreitet, womit mehrere Anschnittpunkte und/oder Freischnittpunkte in einem Bereich (einer Teilmenge von Schneidkonturpunkten) der Schneidkontur bestimmt werden können, welche sicher kein Kippen des zumindest einen herauszutrennenden Werkstückteils beim Freischneiden bewirken und womit unter Berücksichtigung eines oder mehreren beliebigen Positionierungsparametern des Schneidwerkzeugs der Anschnittpunkt und/oder Freischnittpunkt in diesem Bereich der Schneidkontur ausgewählt werden kann.

Vorzugsweise erfolgt der Kräftevergleich der zulässigen Kraft mit einem minimalen Kippkraftschrankenwert, bei dessen Überschreitung zumindest ein risikoarmer Bereich vorliegt. In diesem Bereich kann eine schnelle dreiachsige Positionierbewegung, insbesondere eine anfänglich horizontale Positionierungsbewegung des Schneidwerkzeugs der Strahlschneidvorrichtung nach dem Freischneiden des zumindest einen herauszutrennenden Werkstückteils erfolgen.

Vorteilhaft wird der minimale Kippkraftschrankenwert von der minimalen Bearbeitungskraft abgeleitet, welche nach dem Freischneiden des zumindest einen herauszutrennenden Werkstückteils des Werkstücks entsteht. Dadurch kann bei Überschreiten der minimalen Bearbeitungskraft an zumindest einem Schneidkonturpunkt der Schneidkontur ein Kippen des zumindest einen herauszutrennenden Werkstückteils verhindert werden. Damit kann eine auf heutigen Strahlschneidvorrichtungen, beispielsweise Flachbettstrahlschneidvorrichtung, übliche schnelle dreiachsige Positionierbewegung ausgeführt werden, welche nur eine minimale Bearbeitungskraft zum Zeitpunkt des Freischneidens und im darauffolgenden kurzen Zeitraum der Interaktion auf das zumindest eine herauszutrennende Werkstückteil ausübt. Mit dreiachsig ist eine Positionierungsbewegung des Schneidkopfs gemeint, die simultan zur Bewegung der horizontalen Antriebsachsen X, Y auch eine Bewegung der vertikalen Antriebsachse Z beinhaltet.

Alternativ oder ergänzend erfolgt der Kräftevergleich der zulässigen Kraft mit einem maximalen Kippkraftschrankenwert, bei dessen Überschreitung zumindest ein risikofreier Bereich vorliegt. In diesem Bereich kann auch eine einfache Positionierungsbewegung des Schneidwerkzeugs der Strahlschneidvorrichtung nach dem Freischneiden des zumindest einen herauszutrennenden Werkstückteils des Werkstücks erfolgen. Damit kann der Schneidkopf unmittelbar nach dem Freischneiden vertikal angehoben werden, und das herauszutrennende Werkstückteil verkippt nicht, obschon der Schneidstrahl während der vertikalen Bewegung mit voller Kraft auf das Werkstückteil einwirkt. Es versteht sich, dass hierbei andere Positionierungsparameter für die Positionierungsbewegung des Schneidkopfs verwendet werden, als beim vorgenannten dreiachsigen Positionierungsverfahren.

Vorteilhaft wird der maximale Kippkraftschrankenwert von einer maximalen Bearbeitungskraft abgeleitet, welche ihrerseits aus den Schneidwerkzeugparametern und Positionierungsparametern berechnet werden kann. Damit wird die maximal mögliche Kraft, die das Schneidwerkzeug zum Zeitpunkt des Freischneidens auf das zumindest eine herauszutrennende Werkstückteil des Werkstücks ausübt, herangezogen, und der risikofreie Bereich kann sehr genau ermittelt werden.

Es versteht sich, dass die Schneidkonturpunkte der Schneidkontur des zumindest einen herauszutrennenden Werkstückteils, welche nicht in den vorgenannten risikoarmen und risikofreien Bereichen liegen, den Risikobereich gemäss Schritt d) bilden. Es versteht sich weiter, dass neben einem minimalen und maximalen Kippkraftschrankenwert auch weitere tiefer- und höherliegende, insbesondere dazwischenliegende Schrankenwerte möglich sind, welche die Ermittlung von weiteren abgestuften Bereichen ermöglichen, und somit feine Abstufungen bei der Auswahl der Positionierungsparameter der Positionierungsbewegung nach dem Freischneiden des zumindest einen herauszutrennenden Werkstückteils ermöglichen.

Bevorzugt erfolgt nach dem Schritt b), eine Ermittlung der Lage des zumindest einen herauszutrennenden Werkstückteilparameters relativ zur Lage des zumindest eines Polygonparameters des Auflagepolygons, womit die statische Auflagestabilität des zumindest einen herauszutrennenden Werkstückteils ermittelt wird. Die statische Auflagestabilität eines herauszutrennenden Werkstückteils ändert sich, wenn beispielsweise ein herauszutrennendes Werkstückteil innerhalb eines weiteren herauszutrennenden Werkstückteils angeordnet ist und das eine herauszutrennende Werkstückteil vor dem aussen liegenden weiteren herauszutrennenden Werkstückteil herausgetrennt wird.

Alternativ oder ergänzend zur Ermittlung der Lage des zumindest einen herauszutrennenden Werkstückteilparameters relativ zur Lage des zumindest einen Polygonparameters des Auflagepolygons, wird die Parität der zulässigen Kraft bestimmt. Somit wird bei einer negativen zulässigen Kraft, eine ungünstige Auflagestabilität des zumindest einen herauszutrennenden Werkstückteils einfach feststellbar und mit den bereits genannten Vorteilen kombinierbar.

Vorteilhaft erfolgt, alternativ oder ergänzend zur Ermittlung der Lage des zumindest einen herauszutrennenden Werkstückteilparameters relativ zur Lage des zumindest eines Polygonparameters des Auflagepolygons, ein Prüfen ob der in Schritt d) bestimmte zumindest eine Risikobereich alle Schneidkonturpunkte der Schneidkontur umfasst. Sofern dies zutrifft, kann eine Neupositionierung des Werkstücks oder des herauszutrennenden Werkstückteils erfolgen.

Vorzugsweise wird zumindest ein Mikrosteg in der Schneidkontur des zumindest einen herauszutrennenden Werkstückteils belassen, womit zumindest ein herauszutrennendes Werkstückteil vor dem Verkippen gesichert wird. Beispielsweise wird ein Mikrosteg bei einem Werkstück dann notwendig, wenn der in Schritt d) bestimmte zumindest eine Risikobereich alle Schneidkonturpunkte der Schneidkontur umfasst, d.h., wenn der minimale Kippkraftschrankenwert auf keinem Schneidkonturpunkt der Schneidkontur von der zulässigen Kraft erreicht wird, oder wenn die Auflagestabilität zu gering ist. Dabei wird der zumindest eine Mikrosteg meist bei Aussenkonturen von herauszutrennenden Werkstückteilen angewendet.

Wird ein Mikrosteg in einer Schneidkontur eines Werkstückteils belassen, existiert für dieses Werkstückteil kein Freischnittpunkt sondern nur ein oder mehrere Anschnittpunkte.

Vorteilhaft wird zumindest ein Mikrosteg derart ausgeführt, dass bei der trennenden Bearbeitung der Schneidkontur des zumindest einen herauszutrennenden Werkstückteils zumindest ein Streckenabschnitt vor dem Freischnittpunkt unbearbeitet bleibt, wodurch es nicht zum Freischnitt und somit nicht zum Verkippen des Werkstückteils kommt. Dadurch kann die gesamte Schneidkontur ebenfalls unterbrechungsfrei geschnitten werden, wie bei der trennenden Bearbeitung ohne Mikrosteg.

Weiter vorteilhaft wird der zumindest eine Mikrosteg an jenem Schneidkonturpunkt oder an jener Teilmenge von Schneidkonturpunkten ausgeführt, an dem die zulässige Kraft einen negativen Minimalwert erreicht. Dadurch ergibt sich auch für das zumindest einen herauszutrennenden Werkstückteil mit nur zwei Auflagepunkten zusammen mit dem zumindest einen Mikrosteg eine maximale Lagestabilität.

Weiter Vorteilhaft wird der zumindest eine Mikrosteg auf einer Verlängerung einer Verbindungslinie von zumindest einem Auflagepunkt der Werkstückauflage zu zumindest einem Werkstückteilparameter, beispielsweise dem Schwerpunkt, ausgeführt. Dadurch werden auch herauszutrennende Werkstückteile mit nur einem Auflagepunkt gegen Verkippen gesichert.

Alternativ oder ergänzend zum Belassen des zumindest einen Mikrostegs in der Schneidkontur des zumindest einen herauszutrennenden Werkstückteils, wird zumindest ein herauszutrennendes Werkstückteil des Werkstücks vom Schneidwerkzeug zerkleinert. Damit kann insbesondere bei kippgefährdeten Löchern oder Ausschnitten in Werkstückteilen sichergestellt werden, dass die herauszutrennenden Schneidkonturen nach dem Freischneiden unmittelbar durch die Werkstückauflage fallen, ohne mit dem Schneidwerkzeug zu kollidieren.

Bevorzugt erfolgt das Ermitteln der relativen Lage und/oder Ausrichtung des Werkstücks und/oder des zumindest einen herauszutrennenden Werkstückteils in Bezug auf die Werkstückauflage (Schritt b)), und/oder das Ermitteln zumindest der relativen Position des zumindest einen Auflagepunkts der Werkstückauflage, unterhalb des zumindest einen herauszutrennenden Werkstückteils (Schritt c)), mit zumindest einer Erkennungseinrichtung, wobei die zumindest eine Erkennungseinrichtung eine Sensorik der Strahlschneidvorrichtung beinhaltet, womit die relative Lage und Ausrichtung vom Werkstück auf der Werkstückauflage automatisch bestimmbar ist.

Vorteilhaft ist die Sensorik am Schneidkopf der Strahlschneidvorrichtung lokalisiert. Damit lässt sich das auf der Werkstückauflage positionierte Werkstück bzw. das zumindest eine herauszutrennende Werkstückteil hochauflösend erkennen.

Vorzugsweise besteht die Sensorik aus einer Gruppe von optischen Detektoren, berührungslosen Abstandsmesseinrichtungen und einer Kamera, womit die relative Lage vom Werkstück auf der Werkstückauflage exakt bestimmbar ist.

Vorteilhaft wird damit zumindest eine Kante des Werkstücks detektiert, womit die Lage und Ausrichtung des Werkstücks sehr einfach messbar sind.

Alternativ oder ergänzend wird eine Kante des zumindest einen herauszutrennenden Werkstückteils detektiert, womit eine exakte Erkennung des herauszutrennenden Werkstücks erfolgen kann.

Vorzugsweise erfolgt die Bestimmung des zumindest einen Werkstückteilparameters mit zumindest einer Erkennungseinrichtung, womit die relative Lage vom zumindest einen herauszutrennenden Werkstückteil auf der Werkstückauflage bestimmbar ist.

Alternativ erfolgt die Bestimmung des zumindest einen Polygonparameters des Auflagepolygons mit zumindest einer Erkennungseinrichtung, womit eine frei wählbare Auflage des zumindest einen herauszutrennenden Werkstückteils auf der Werkstückauflage einfach bestimmbar ist.

Weiter alternativ erfolgt die Bestimmung des zumindest einen Werkstückteilparameters und des zumindest einen Polygonparameter des Auflagepolygons im Schritt b1) mit zumindest einer Erkennungseinrichtung, womit sich die beiden genannten Vorteile kombinieren lassen und eine zuverlässige Weiterführung des Schneidprozesses gewährleistet ist.

Alternativ erfolgt das Ermitteln der relativen Lage und/oder Ausrichtung des Werkstücks in Bezug auf die Werkstückauflage (Schritt b)), durch zumindest einen mechanischen Anschlag der Strahlschneidvorrichtung für das Werkstück. Dadurch muss keine Erkennungseinrichtung verwendet werden, und die Auflagepunkte sind zum Voraus bestimmt.

Vorzugsweise erfolgt nach der Ermittlung der relativen Lage gemäss dem Schritt b) und nach dem Ermitteln des zumindest einen Risikobereichs gemäss dem Schritt d), eine Neupositionierung des zumindest einen herauszutrennenden Werkstückteils, womit auf eine ungünstige relative Lage des zumindest einen herauszutrennenden Werkstückteils auf der Werkstückauflage reagiert werden kann. Dies erfolgt insbesondere, wenn alle Schneidkonturpunkte der Schneidkontur zumindest eines herauszutrennenden Werkstückteils im zumindest einen Risikobereich angeordnet sind.

Alternativ kann nach der Ermittlung der relativen Lage gemäss dem Schritt b) und nach dem Ermitteln des zumindest einem Risikobereichs gemäss dem Schritt d), eine Neupositionierung des gesamten Werkstücks erfolgen, womit auf eine ungünstige relative Lage des Werkstücks auf der Werkstückauflage reagiert werden kann. Dies kann insbesondere erfolgen, wenn die Risikobereiche der Schneidkonturen vieler herauszutrennender Werkstückteile viele oder fast alle Schneidkonturpunkte enthalten.

Vorteilhaft erfolgt die Neupositionierung des zumindest einen herauszutrennenden Werkstückteils abhängig von einem zuvor erstellten Schneidplan am Werkstück, womit auf die Position am Schneidplan reagiert werden kann.

Vorteilhaft erfolgt die Neupositionierung des zumindest einen herauszutrennenden Werkstückteils abhängig von einem zuvor geänderten Schneidplan am Werkstück, womit die Flexibilität der Neupositionierung erhöht wird.

Alternativ oder ergänzend werden zumindest die Auflagepunkte, welche unterhalb des Werkstücks oder des zumindest einen herauszutrennenden Werkstückteils liegen, neu positioniert, womit auch mit der Werkstückauflage auf ungünstig positionierte Werkstücke reagiert werden kann.

Bevorzugt ist das Ermitteln von zumindest einem Risikobereich an der Schneidkontur des zumindest einen herauszutrennenden Werkstückteils (Schritt d)) und/oder das Bestimmen des zumindest einen Anschnittpunkts und/oder zumindest einen Freischnittpunkts für das Schneidwerkzeug (Schritt e)) von der Geometrie der Schneidkontur des zumindest einen herauszutrennenden Werkstückteils abhängig, womit ungünstige Schneidkonturbereiche gemieden und eine verringerte Bearbeitungskraft beim Schneiden des zumindest einen herauszutrennenden Werkstückteils verwendet werden können.

Insbesondere ist das Ermitteln von zumindest einem Risikobereich an der Schneidkontur des zumindest einen herauszutrennenden Werkstückteils (Schritt d)) und/oder das Bestimmen des zumindest einen Anschnittpunkts und/oder zumindest einen Freischnittpunkts für das Schneidwerkzeug (Schritt e)) von der Schneidkonturkrümmung der Schneidkontur des zumindest einen herauszutrennenden Werkstückteils abhängig, womit die Wahrscheinlichkeit des Kippens des zumindest einen herauszutrennenden Werkstückteils verringert wird.

Vorteilhaft wird der Anschnittpunkt an einem konvexen Schneidkonturabschnitt des zumindest einen herauszutrennenden Werkstückteils ausgewählt, womit die Wahrscheinlichkeit des Verkippens des zumindest einen Herauszutrennenden Werkstückteils zusätzlich verringert wird.

Vorteilhaft ist das Ermitteln von zumindest einem Risikobereich an der Schneidkontur des zumindest einen herauszutrennenden Werkstückteils (Schritt d)) und/oder das Bestimmen des zumindest einen Anschnittpunkts und/oder zumindest einen Freischnittpunkts für das Schneidwerkzeug (Schritt e)) von einer über mehrere Schneidkonturpunkte der Schneidkontur gemittelten Schneidkonturkrümmung abhängig, womit eine flexible Auswahl des Anschnittpunkts und/oder Freischnittpunkts erfolgt.

Vorteilhaft ist das Ermitteln von zumindest einem Risikobereich an der Schneidkontur des zumindest einen herauszutrennenden Werkstückteils (Schritt d)) und/oder das Bestimmen des zumindest einen Anschnittpunkts und/oder zumindest einen Freischnittpunkts für das Schneidwerkzeug (Schritt e)) von einer im Radius des Wirkungsbereichs eines Schneidwerkzeugparameters, beispielsweise des Schneidgasdrucks, gemittelten positiven und negativen Schneidkonturkrümmung abhängig. Dadurch kann die Bearbeitungskraft im Freischnittpunkt zusätzlich verringert werden.

Vorteilhaft wird das Ermitteln von zumindest einem Risikobereich an der Schneidkontur des zumindest einen herauszutrennenden Werkstückteils (Schritt d)) und/oder das Bestimmen des zumindest einen Anschnittpunkts und/oder zumindest einen Freischnittpunkts für das Schneidwerkzeug (Schritt e)) mithilfe zumindest einer Selektionsgeraden genauer bestimmt, welche zu der Schneidkonturpunktnormalen um den Selektionswinkel geneigt ist, wobei ein Überschneiden der Selektionsgerade mit einem zum Schneidkonturpunkt benachbarten weiteren Schneidkonturpunkt zu einem Ausscheiden des Schneidkonturpunkts als Anschnittpunkt führt bzw. zur Einteilung des Schneidkonturpunkts in einen Risikobereich der Schneidkontur. Dabei wird die Selektionsgerade bzw. der Selektionswinkel von einem Schneidwerkzeugparameter beispielsweise durch den Ausströmungskegelwinkel oder durch den Hüpfwinkel beim fliegenden Positionieren bestimmt und ist abhängig vom Schneiddüsentyp am Schneidwerkzeug. Damit lässt sich die Auswahl der möglichen Anschnittpunkte weiter einschränken und das Kippverhalten genauer berechnen.

Vorteilhaft ist die zumindest eine bestimmte Selektionsgerade ein Bestandteil eines gleichschenkeligen Dreiecks, wobei die Länge der zumindest einen bestimmten Selektionsgerade den Wirkungsbereich des Schneidstrahls des Schneidwerkzeugs beschreibt. Dadurch werden nur diejenigen Schneidkonturpunkte ausgeschieden, an welchen ein Freischneiden tatsächlich eine erhöhte Kippgefahr bedeutet.

Vorzugsweise werden die bestimmten Anschnittpunkte der herauszutrennenden Werkstückteile am Werkstück zum Optimieren der Schneidreihenfolge gereiht und der Anschnitt an einem der bestimmten Anschnittpunkte ausgeführt. Damit wird die Schneidprozessdauer minimiert.

Vorzugsweise werden die bestimmten Freischnittpunkte der herauszutrennenden Werkstückteile am Werkstück zum Optimieren der Schneidreihenfolge gereiht und der Anschnitt an einem der bestimmten Freischnittpunkte ausgeführt. Damit wird die Schneidprozessdauer minimiert.

Alternativ oder ergänzend werden die bestimmten Anschnittpunkte der herauszutrennenden Werkstückteile am Werkstück zum Optimieren des Positionierungswegs des Schneidwerkzeugs am Werkstück gereiht und der Anschnitt an einem der bestimmten Anschnittpunkte ausgeführt. Damit wird die Schneidprozessdauer minimiert.

Alternativ oder ergänzend werden die bestimmten Freischnittpunkte der herauszutrennenden Werkstückteile am Werkstück zum Optimieren des Positionierungswegs des Schneidwerkzeugs am Werkstück gereiht und der Anschnitt an einem der bestimmten Freischnittpunkte ausgeführt. Damit wird die Schneidprozessdauer minimiert.

Vorteilhaft werden zuvor bestimmte risikoarme Bereiche von Schneidkonturpunkten der Schneidkontur der herauszutrennenden Werkstückteile am Werkstück zum Optimieren der Schneidreihenfolge der herauszutrennenden Werkstückteile und deren Werkstückkonturen gereiht und das Ausführen der Anschnitte aller herauszutrennenden Werkstückteile an den optimalen Schneidkonturpunkten der Schneidkonturen der jeweiligen Werkstückteile durchgeführt. Damit kann eine sehr kippsicheres Schneiden mit minimaler Schneidprozessdauer garantiert werden.

Vorteilhaft erfolgt das Optimieren der Schneidreihenfolge der herauszutrennenden Werkstückteile und deren Werkstückkonturen insofern, dass kein bereits aus dem Werkstück herausgetrenntes Werkstückteil im Positionierungsweg des Schneidwerkzeugs liegt, womit das Schneidwerkzeug kein herausgetrenntes Werkstückteil überfahren kann, welches seinerseits aufgrund des wirkenden Schneidgasdrucks verkippen könnte.

Weiter vorteilhaft erfolgt das Optimieren der Schneidreihenfolge, indem bereits herausgetrennte Werkstückteile beim Positionierungsvorgang des Schneidwerkzeugs umfahren werden, dadurch werden ebenfalls keine bereits herausgetrennten Werkstückteile überfahren und verkippt.

Weiter vorteilhaft erfolgt das Optimieren der Schneidreihenfolge des Schneidwerkzeugs insofern, dass der Schneidkopf zuerst senkrecht angehoben und danach zweiachsig, beispielsweise mit abgestelltem Schneidstrahl, über die bereits herausgetrennten Werkstückteile positioniert wird. Dies ist möglich, wenn der entsprechende Freischnitt in einem Risikofreien, also kippsicheren Bereich der Schneidkontur liegt. Falls bei der Positionierbewegung keine bereits herausgetrennten Werkstückteile überfahren werden, muss der Schneidstrahl auch beim zweiachsigen Positionierungen nicht abgeschaltet werden. Dadurch kann die Positionierzeit verringert werden.

Darüber hinaus ist es vorteilhaft, wenn in Abhängigkeit der zuvor genannten Optimierungen der Schneidreihenfolge der Positionierungsweg minimiert wird, sodass der Schneidprozess in kürzester Zeit vollendet wird.

Bevorzugt wird vor dem Ermitteln der relativen Lage und/oder Ausrichtung des Werkstücks und/oder des Schneidplans in Bezug auf die Werkstückauflage (Schritt b)), eine Bestimmung der Konturgrösse des zumindest einen herauszutrennenden Werkstückteils ausgeführt, womit vorab eine Vereinfachung des erfindungsgemässen Verfahrensablaufs möglich ist.

Vorteilhaft wird das zumindest eine herauszutrennende Werkstückteil von zumindest einer geometrischen Figur, beispielsweise einem Vieleck, oder einem Kreis eingefasst, womit die Konturgrösse des herauszutrennenden Werkstückteils einfach bestimmbar ist.

Vorteilhaft ist die geometrische Figur als Viereck, beispielsweise einem Rechteck, ausgebildet, womit die Konturgrösse des herauszutrennenden Werkstückteils besonders einfach bestimmbar ist.

Vorteilhaft ist die zumindest eine geometrische Figur als achsenparalleles Rechteck ausgebildet, wobei achsenparallel im Sinne von parallel zu zumindest einem der Auflageelemente der Werkstückauflage zu verstehen ist, womit eine einfache Bestimmung der Konturgrösse des zumindest einen herauszutrennenden Werkstückteils erfolgt und gleichzeitig die Werkstückauflage berücksichtigt wird.

Ergänzend wird vor dem Ermitteln der relativen Lage und/oder Ausrichtung des Werkstücks und/oder des Schneidplans in Bezug auf die Werkstückauflage (Schritt b)), die bestimmte Konturgrösse des zumindest einen herauszutrennenden Werkstückteils zumindest einer zuvor definierten Konturgrössenklasse zugeordnet. Damit wird das zumindest eine herauszutrennende Werkstückteil einfach klassifizierbar.

Vorteilhaft werden mehrere Konturgrössenklassen definiert, womit unterschiedliche zu trennende Werkstückteile einfach zusammengefasst werden.

Vorteilhaft erfolgt die Definition der Konturgrössenklasse abhängig von der Werkstückauflage, wobei zumindest ein Abstand von einem Auflageelement der Werkstückauflage zu zumindest einem weiteren Auflageelement der Werkstückauflage berücksichtigt wird. Damit werden die Räume zwischen den Auflageelementen bestimmt und je nach verwendeter Werkstückauflage vorab die möglichen Konturgrössenklassen bestimmbar.

Vorteilhaft wird die Werkstückauflage parametrisiert, sodass die möglichen Konturgrössenklassen je nach verwendeter Werkstückauflage einfach bestimmbar sind.

Vorteilhaft werden die Konturgrössenklassen so definiert, dass für zumindest ein herauszutrennendes Werkstückteil aus zumindest einer der Konturgrössenklassen die Ermittlung von zumindest einem Risikobereich nicht erfolgen muss. Dadurch wird der Berechnungsaufwand reduziert.

Vorteilhaft wird die zumindest eine Konturgrössenklasse so definiert, dass herauszutrennende Werkstückteile mit Konturgrössen welche kleiner sind als der Abstand zwischen zwei Auflageelementen eine Konturgrössenklasse bilden. Diese herauszutrennenden Werkstückteile, welche zumeist Innenkonturwerkstückteile bzw. Löcher oder Ausschnitte darstellen, fallen nach deren Freischneiden ungehindert zwischen den Auflageelementen der Werkstückauflage hinunter.

Vorteilhaft wird die zumindest eine Konturgrössenklasse so definiert, dass herauszutrennende Werkstückteile mit Konturgrössen welche kleiner als die Hälfte und/oder kleiner als ein Drittel oder vorzugsweise kleiner als ein parametrierbarer Bruchteil des Abstands zwischen zwei Auflageelementen und/oder Auflagepunkten eine Konturgrössenklasse bilden, wobei somit sichergestellt wird, dass diese Konturgrössenklasse nur herauszutrennende Werkstückteile aufweist, die sicher zwischen den Auflageelementen der Werkstückauflage hindurchfallen.

Bevorzugt wird ein bereits klassifiziertes herauszutrennendes Werkstückteil nicht weiter klassifiziert, womit alle Schneidkonturen aller Werkstückteile des Werkstücks eineindeutig einer Konturgrössenklasse zugeordnet sind.

Alternativ zu den oben genannten Bestimmungen und Vergleichen von Kräften ist auch das Bestimmen und Vergleichen von Momenten äquivalent möglich, womit nicht nur die wirkenden Kräfte an zumindest einem Schneidkonturpunkt der Schneidkontur des zumindest einen herauszutrennenden Werkstückteils bestimmt werden, sondern auch die wirkenden Momente an zumindest einem Schneidkonturpunkt der Schneidkontur bestimmt und verglichen werden. Beispielsweise werden aus zumindest einer Momentengleichung die wirkenden Kräfte an zumindest einem Schneidkonturpunkt der Schneidkontur des zumindest einen herauszutrennenden Werkstückteils bestimmt.

Vorzugsweise sind die Verfahrensschritte und Elemente in einem virtuellen Raum abgebildet, wobei die Werkstückauflage virtuell ist und der zumindest eine Schneidplan zumindest eine Information zur Lage der virtuellen Werkstückauflage relativ zum virtuellen Werkstück aufweist.

Alternativ oder ergänzend sind die Verfahrensschritte und Elemente in einem virtuellen Raum abgebildet, wobei die Werkstückauflage mit den Auflagepunkten virtuell ist und der zumindest eine Schneidplan zumindest eine Information zur Ausrichtung der virtuellen Werkstückauflage relativ zum virtuellen Werkstück aufweist. Damit lässt sich das zuvor beschriebene Verfahren rein virtuell durchführen. Weiters lässt sich der zumindest eine Schneidplan flexibel bestimmen bzw. gestalten.

Bevorzugt wird eine Schar von Schneidplänen mit zumindest einem weiteren Schneidplan festgelegt, wobei die Lage der virtuellen Werkstückauflage in jedem Schneidplan der Schar verschieden und in x- und y- Richtung versetzt ist. Damit lassen sich eine Vielzahl von Schneidplänen vor dem tatsächlichen Bearbeitungs- bzw. Schneidprozess erstellen, in welchen Risikobereiche unter Berücksichtigung der Lage der virtuellen Werkstückauflage und der virtuellen Auflagepunkte bestimmt werden. Die Anschnitt- und/oder Freischnittpunkte werden entsprechend in Abhängigkeit der ermittelten Risikobereiche gesetzt.

In einer vorteilhaften Variante wird eine Schar von Schneidplänen mit zumindest einem weiteren Schneidplan festgelegt, wobei die Ausrichtung der virtuellen Werkstückauflage in jedem Schneidplan der Schar verschieden ist. Damit können zusätzlich zum oben genannten Vorteil Schneidpläne im Voraus berechnet werden, deren virtuelle Werkstückauflage leicht verdreht ist, womit für jede tatsächlich mögliche Auflagesituation des Werkstücks auf der Werkstückauflage der Strahlschneidvorrichtung virtuell im Voraus ein Schneidplan optimierbar ist.

Vorzugsweise wird jener Schneidplan aus der Schar von Schneidplänen ausgewählt, welcher die grösste Übereinstimmung der zumindest einen Information zur Lage des zumindest einen herauszutrennenden Werkstückteils relativ zur virtuellen Werkstückauflage mit einer tatsächlich ermittelten Lage und/oder Ausrichtung der Werkstückauflage der Strahlschneidvorrichtung relativ zum Werkstück aufweist. So kann der Schneidplan ausgewählt werden, der eine tatsächliche Situation des Werkstücks auf der Werkstückauflage mit grösstmöglicher Übereinstimmung wiedergibt.

Die Auswahl jenes Schneidplans aus der Schar von Schneidplänen erfolgt unmittelbar bevor der Schneidprozess an der Strahlschneidvorrichtung ausgeführt wird, womit die Strahlschneidvorrichtung jenen Schneidplan auswählen kann, der am besten mit der Auflagesituation des zumindest einen zu trennenden Werkstückteils übereinstimmt.

Bevorzugt wird der ausgewählte Schneidplan der Schar hinsichtlich der tatsächlichen Lage der Werkstückauflage relativ zum Werkstück nach dem erfindungsgemässen Verfahren optimiert, womit der Schneidplan mit der Information zur Lage und/oder Ausrichtung der virtuellen Werkstückauflage und den daraus resultierenden Risikobereichen der herauszutrennenden Werkstückteile an die tatsächlichen Gegebenheiten des Werkstücks auf der Werkstückauflage weiter angepasst werden kann. Ein Kippen von Werkstücken beim Freischneiden kann dadurch mit grösstmöglicher Sicherheit verhindert werden.

In einer Vorteilhaften Weiterbildung der Erfindung wird eine Abfolge von wenigstens zwei Anschnittpunkten und/oder Freischnittpunkten für das Schneidwerkzeug an den Schneidkonturen von zumindest zwei in der Abfolge nacheinander herauszutrennenden Werkstückteilen bestimmt, unter Berücksichtigung von mehr als einem erkannten Risikobereich an den Schneidkonturen der zumindest zwei nacheinander herauszutrennenden Werkstückteile. Hierdurch wird vorteilhaft erreicht, dass es auch in einer Abfolge von hintereinander geschnittenen Werkstücken nicht zu einem ungewollten Kippen eines oder mehrerer dieser Werkstücke kommen kann, insbesondere wenn das Schneiden des in der Abfolge zweiten Werkstücks das bereits geschnittene beeinflussen kann. Dieses wird in der Bestimmung der Abfolge mitberücksichtigt, sodass keines der Werkstücke in Abhängigkeit vom Schneiden des jeweils anderen kippen kann.

Vorzugsweise sind die zwei nacheinander herauszutrennenden Werkstückteile dabei benachbart zueinander, vorzugsweise nebeneinander angeordnet. Die Werkstückteile können derart ausgewählt werden, dass der dazwischenliegende Positionierungsweg frei von geschnittenen Werkstückteilen ist. Das bedeutet, dass auf dem dazwischenliegenden Positionierungsweg keine bereits geschnittenen Werkstückteile überfahren werden.

Das erfindungsgemässe Verfahren lässt sich auch als ein computerimplementiertes Verfahren zum automatischen Bestimmen und Erzeugen von Geometrieelementen, anwenden, wobei nach dem Schritt e) das automatische Erzeugen und Speichern von zumindest einem Datensatz mit Geometrieelementen, welcher zumindest die zumindest eine Anschnittkontur angibt erfolgt.

Alternativ oder ergänzend zum automatischen Erzeugen und Speichern von zumindest einem Datensatz mit Geometrieelementen, erfolgt das automatische Erzeugen und Speichern von zumindest einem Bewegungsbefehl, welcher zumindest die Bewegung des Schneidwerkzeugs zum zumindest einen Anschnittpunkt und/oder zum zumindest einen Freischnittpunkt angibt.

Mit diesem computerimplementierten Verfahren lässt sich der Schneidplan, nach welchem zumindest ein aus einem Werkstück herauszutrennendes Werkstückteil geschnitten wird, entweder an einem Computer der Strahlschneidvorrichtung oder auf einem von der Strahlschneidvorrichtung unabhängigen Computer erstellen. Dabei wird die Schneidprozessreihenfolge und/oder der Positionierungsweg des Schneidwerkzeugs so optimierbar, dass keine herauszutrennenden Werkstückteile verkippen und somit keine Kollision des zumindest einen herauszutrennenden Werkstückteils mit dem Schneidkopf erfolgen kann und beim automatischen Entladen keine Werkstückteile zerkratzt, verbogen oder beschädigt werden, und dass dabei der gesamte Positionierungsweg bzw. die gesamte Positionierungszeit minimal werden.

Vorteilhaft erfolgt das automatische Erzeugen und Speichern von mehreren Datensätzen mit Geometrieelementen und/oder mehreren Bewegungsbefehlen, welche zumindest die zumindest eine Anschnittkontur angeben und/oder zumindest die Bewegung des Schneidwerkzeugs zum zumindest einen Anschnittpunkt und/oder zum zumindest einen Freischnittpunkt angeben. Damit lassen sich für alle Werkstückteile des Werkstücks die Positionierungsbewegungen des Schneidwerkzeugs zuverlässig steuern.

Vorzugsweise werden die gespeicherten Datensätze mit Geometrieelementen und/oder die gespeicherten Bewegungsbefehle, welche zumindest die zumindest eine Anschnittkontur und/oder zumindest die Bewegung des Schneidwerkzeuges zum zumindest einen Anschnittpunkt und/oder zum zumindest einen Freischnittpunkt angeben, an die Steuerungseinrichtung der Strahlschneidvorrichtung übermittelt. Damit kann anschliessend der Schneidprozess unmittelbar gestartet werden.

Bevorzugt wird der zumindest eine Datensatz mit Geometrieelementen und/oder der zumindest eine gespeicherte Bewegungsbefehl, vorteilhaft mehrere Datensätze mit Geometrieelementen und/oder mehrere Bewegungsbefehle, als Schneidplanvariante des Werkstücks in einer Speichereinrichtung abgespeichert, womit der gesamte Schneidplan samt allen bestimmten Anschnittkonturen und/oder bestimmten Anschnittpunkten und/oder bestimmten Freischnittpunkten abgespeichert ist und anschliessend der Schneidprozess unterbrechungsfrei, in einem Durchlauf, für alle herauszutrennenden Werkstückteile vom Schneidwerkzeug, geschnitten werden kann.

Erfindungsgemäss wird eine Strahlschneidvorrichtung mit einem Schneidwerkzeug, einer Werkstückauflage, einer Steuereinrichtung und zumindest einer Speichereinrichtung sowie einer zuvor beschriebenen Erkennungseinrichtung und/oder einem zuvor beschriebenen mechanischen Anschlag adaptiert zum Ausführen eines der zuvor geoffenbarten Verfahren.

Damit wird ein vorab definierter Schneidplan schnell und unterbrechungsfrei mit dem Schneidwerkzeug der Strahlschneidvorrichtung schneidbar, ohne dass herauszutrennende Werkstückteile kippen und das Schneidwerkzeug von einem verkippten herauszutrennenden Werkstückteil beschädigt werden kann. Das zumindest eine herauszutrennende Werkstückteil lässt sich schnell und kostengünstig in einem vollautomatischen Schneidprozess aus dem Werkstück heraustrennen.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind.

Die Bezugszeichenliste ist, wie auch der technische Inhalt der Patentansprüche und Figuren, Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Es zeigen dabei:

Fig. 1    eine Strahlschneidvorrichtung, an welcher die erfindungsgemässen Verfahren ausführbar sind, in einer perspektivischen Ansicht,

Fig. 2    eine Werkstückauflage der Strahlschneidvorrichtung gemäss Fig. 1 in einer perspektivischen Ansicht,

Fig. 3    einen Schneidkopf der Strahlschneidvorrichtung und die Werkstückauflage der Schneidvorrichtung samt Werkstück und Werkstückteil gemäss Fig. 1 und Fig. 2 in einer detaillierten Ansicht,

Fig. 4      den Schneidkopf der Strahlschneidvorrichtung und die Werkstückauflage samt Werkstück und Werkstückteil gemäss Fig. 3 in einer perspektivischen Ansicht,

Fig. 5      einen Schneidplan des Werkstücks mit den herauszutrennenden Werkstückteilen mit unterschiedlichen Konturgrössen auf der Werkstückauflage in einer detaillierten Aufsichtsdarstellung,

Fig. 6      eine Geometrie der Schneidkontur eines herauszutrennenden Werkstückteils des Werkstücks gemäss den vorhergehenden Figuren in einer detaillierten Aufsichtsdarstellung,

Fig. 7      ein Werkstück mit mehreren Werkstückteilen auf der Werkstückauflage gemäss Fig. 3 in einer detaillierten Aufsichtsdarstellung mit einem Risikobereich und risikoarmen bzw. risikofreien Bereichen der Schneidkontur,

Fig. 8      ein Flussdiagramm einer ersten Ausführungsform des erfindungsgemässen Verfahrens,

Fig. 9      eine einfache graphische Darstellung des erfindungsgemässen computerimplementierten Verfahrens als zweite Ausführungsform,

Fig. 10      ein Computer gemäss Fig. 9 zum Durchführen des computerimplementierten Verfahrens,

Fig. 11      zwei Schneidpläne einer Schar von Schneidplänen mit einer virtuellen Werkstückauflage gemäss dem erfindungsgemässen computerimplementierten Verfahren,

Fig. 12      ein Flussdiagramm einer dritten, vereinfachten Ausführungsform des erfindungsgemässen Verfahrens, und

Fig. 13      ein Werkstück mit mehreren Werkstückteilen und einfachen Suchbereichen zur Veranschaulichung der vereinfachten Ausführungsform des Verfahrens.

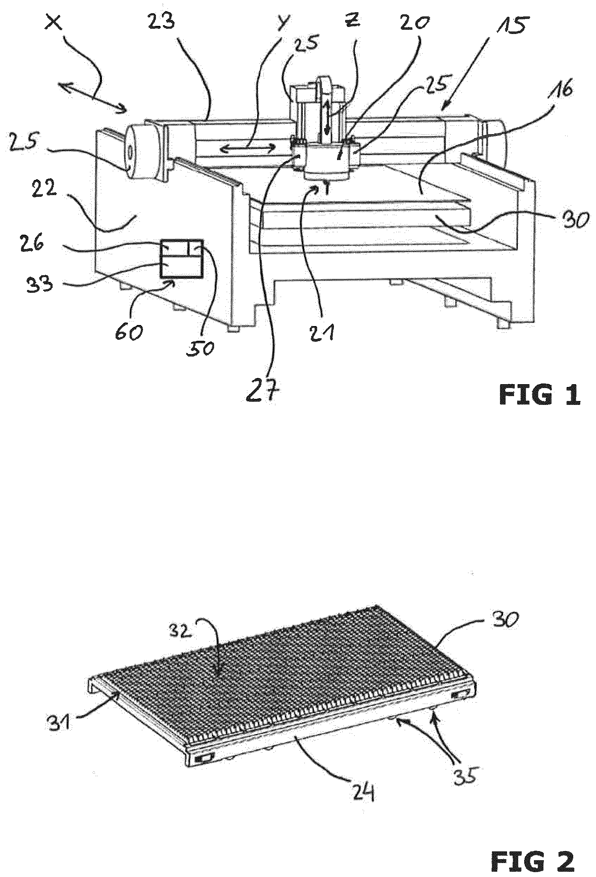

Die in den Figuren 1 bis 4 gezeigte Strahlschneidvorrichtung 15 zum Heraustrennen von einem Werkstückteil 18 aus einem Werkstück 16 umfasst ein Schneidwerkzeug 21 an einem Schneidkopf 20 und eine Werkstückauflage 30. Der Schneidkopf 20 und die Werkstückauflage 30 werden von einem Gestell 22 der Strahlschneidvorrichtung 15 getragen und sind relativ zueinander verfahrbar. Der Schneidkopf 20 ist auf einer Brücke 23 der Stahlschneidvorrichtung 15 entlang der Antriebsachsen Y, Z verfahrbar gelagert. Die Brücke 23 wiederum ist entlang der Antriebsachse X verfahrbar. Die dafür notwendigen Antriebe 25 werden von einer Antriebssteuerung 26 der Steuereinrichtung 60 gesteuert bzw. geregelt, sodass der Schneidkopf 20 neben präzisen Verfahrwegen für die Schneidkonturen 17 zum Heraustrennen der Werkstückteile 18 auch schnelle Positionierungsbewegungen mit genauen Positionierungsparametern ausführen kann.
Zu den genannten Positionierungsparametern gehören nicht abschliessend aufgezählt eine Positionierungsgeschwindigkeit, eine Positionierungsbeschleunigung, eine Positionierungsrichtung, welche unmittelbar nach dem Freischneiden des Werkstückteils 18 der Positionierungsbewegung des Schneidkopfs 20 zugrunde liegen.
Die Werkstückauflage 30 umfasst eine Auflagefläche mit einer Vielzahl an Auflageelementen 31, wobei jeder dieser Auflageelemente 31 mehrere Auflagepunkte 32 aufweist, welche das darauf aufgelegte Werkstück 16 tragen. Die Werkstückauflage 30 weist einen Rahmen 24 auf. Dieser kann über Rollen 35 am Gestell 22 verfahrbar aufliegen. Die Position der Werkstückauflage 30 bezogen zum Nullpunkt der Antriebsachsen X, Y, bzw. die Positionen jedes der Auflagepunkte 32 der Auflageelemente 31 relativ zum Nullpunkt der Antriebsachsen X, Y sind in der Speichereinrichtung 50 der Steuereinrichtung 60 gespeichert.
Das Schneidwerkzeug 21 umfasst eine Schneiddüse 36, durch welche der Schneidstrahl 34 aus dem Schneidwerkzeug 21 austritt. Mit dem Schneidstrahl 34 wird das herauszutrennende Werkstückteil 18 aus dem Werkstück 16 herausgetrennt. Im Fall des Laserstrahlschneidens besteht der Schneidstrahl 34 aus dem Laserstrahl und dem Prozessgasstrahl, welcher den Laserstrahl umgibt, beispielsweise Stickstoff. Dabei schmilzt der Laserstrahl das Werkstück 16 in der Bearbeitungszone bzw. der Schneidkontur 17 auf, und der Prozessgasstrahl treibt das aufgeschmolzene Material aus. Das Werkstück 16 weist für jedes zu trennende Werkstückteil 18 eine Schneidkontur 17 auf, welche jeweils durch einen Bereich am Werkstück 16 ausbildet ist, der das zur Schneidkontur 17 gehörende herauszutrennende Werkstückteil 18 begrenzt. Die Schneidkontur 17 wird durch eine Menge von Schneidkonturpunkten 19 gebildet. Der Schneidstrahl 34 ist von der Schneidstrahlsteuerung 33 einstellbar bzw. regelbar, sodass dessen Schneidwerkzeugparameter angepasst werden können. Insbesondere kann im Fall des Laserschneidens der Laserstrahl punktgenau zu Beginn der Anschnittkontur 39 oder am Anschnittpunkt 29 eingeschaltet und, nach dem Schneiden der Schneidkontur 17, punktgenau am Freischnittpunkt wieder ausgeschaltet werden. Der Prozessgasstrahl wird dabei bereits vor dem Laserstrahl eingeschaltet, und er wird in der Regel während der Positionierungsbewegung zwischen Schneidkonturen 17 aufgrund der ansonsten benötigten Abklingzeit nicht ausgeschaltet. Eine Bearbeitungskraft $F_B$, welche vom Schneidstrahl 34 auf die Schneidkontur 17 des herauszutrennenden Werkstückteils 18 des Werkstücks 16 ausgeübt wird, entsteht aufgrund des schneidprozessbedingt hohen Gasdrucks des Prozessgasstrahls von beispielsweise 10 bar oder höher, welcher nicht nur das aufgeschmolzene Material austreibt, sondern auch in einem Umkreis von wenigen Millimetern - je nach Düsenabstand und Düsengeometrie - um die Austrittsachse der Schneiddüse 36 auf das herauszutrennende Werkstückteil 18 und das Werkstück 16 wirkt, und insbesondere eine Kraft darauf ausübt. Beim Heraustrennen des Werkstückteils 18 aus dem Werkstück 16 wird der Schneidstahl 34 entlang der Schneidkonturpunkte 19 der Schneidkontur 17 geführt und trennt im Bereich der Schneidkonturpunkte 19 das Werkstückteil 18 aus dem Werkstück 16. Im Schneidprozess entsteht somit entlang der Schneidkontur 17 ein Schnittspalt zwischen dem zu trennenden Werkstückteil 18 und dem Werkstück 16, wobei der Schnittspalt etwa die Breite des Schneidstrahls 34 aufweist. Im Freischnittpunkt 129 schliesst sich die Schneidkontur 17, und die vorgenannte Bearbeitungskraft $F_B$ wirkt, je nach unmittelbar anschliessender Positionierungsbewegung, stärker oder schwächer, sowie länger oder kürzer, weiterhin auf das nunmehr freigeschnittene Werkstückteil 18. Dieses kann dadurch, je nach Auflagestabilität bzw. Kippstabilität verkippen.

Zu den genannten Schneidwerkzeugparametern gehören nicht abschliessend aufgezählt der Schneidgasdruck, der Düsenabstand, der Düsendurchmesser und die Düsenform.

Die Strahlschneidvorrichtung 15 umfasst eine Steuereinrichtung 60, welche die Schneidstrahlsteuerung 33 sowie die Antriebssteuerung 26 beinhaltet. Weiters umfasst die Strahlschneidvorrichtung 15 eine Speichereinrichtung (50), welche zumindest die Koordinaten ($x_A$, $y_A$) zumindest eines Anschnittpunkts (29) speichert. Alternativ oder ergänzend speichert die Speichereinrichtung (50) zumindest die Koordinaten ($x_F$, $y_F$) zumindest eines Freischnittpunkts (129).

Die Strahlschneidvorrichtung 15 kann eine Erkennungseinrichtung 27 aufweisen, zum Erkennen des Werkstücks 16, des Werkstückteils 18 und/oder der Werkstückauflage 30, vorteilhaft zur Bestimmung der Lage der Werkstückauflage 30 relativ zum Werkstück 16, und ist in der bevorzugten Ausführungsform ein optischer Detektor, beispielsweise eine Kamera oder ein einfacher Fotodetektor. In einer nicht gezeigten alternativen oder ergänzenden Ausführungsform kann die Erkennungseinrichtung 27 auch eine berührungslose Abstandsmesseinrichtung sein oder durch zumindest einen nicht dargestellten mechanischen Anschlag für das Werkstück 16 ersetzt sein, an welchen das Werkstück 16 in X und/oder in Y-Richtung angeschlagen werden kann.

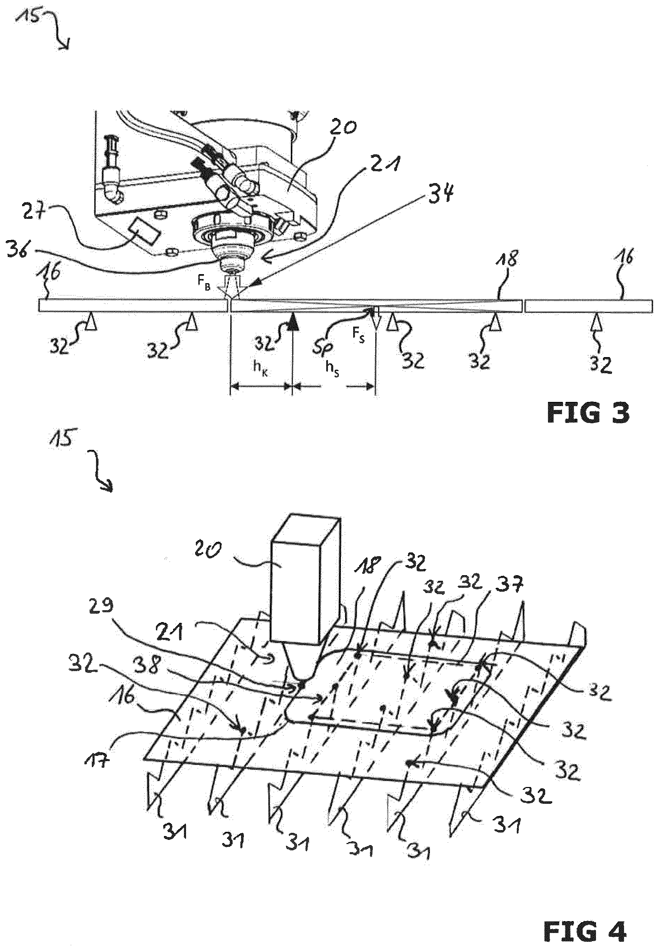

Das zu bearbeitende Werkstück 16, bzw. Schneidobjekt, ist hier weitgehend plattenförmig ausgebildet und aus Metall, wobei das Werkstück 16 auch eine andere Formgebung haben kann und aus einem anderen Material, wie beispielsweise Kunststoff oder einer Legierung, bestehen kann. Das Werkstück 16 und das zu trennende Werkstückteil 18 liegen mit einer dem Schneidwerkzeug 21 gegenüberliegenden Fläche punktweise oder abschnittsweise auf den Auflagepunkten 32 der Auflageelemente 31 auf. Das zu trennende Werkstückteil 18 berührt jene Auflagepunkte 32, welche innerhalb des zu trennenden Werkstückteils 18 angeordnet sind. Je nach Position der Auflagepunkte 32 innerhalb des zu trennenden Werkstückteils 18 wird die Auflagestabilität des zu trennenden Werkstückteils 18 auf der Werkstückauflage 30 bestimmt, welche zusätzlich vom Schwerpunkt $S_P$ des zu trennenden Werkstückteils 18 und der dort wirkenden Gewichtskraft Fs abhängt. Durch das virtuelle Verbinden jener Auflagepunkte 32, welche der Schneidkontur 17 des zu trennenden Werkstückteils 18 am nächsten liegen, lässt sich das konvexe Auflagepolygon 37 definieren, dessen Seitenlinien die Auflagelinien 38 bilden, um welche ein Verkippen des zu trennenden Werkstückteils 18 stattfinden würde (Fig. 4).

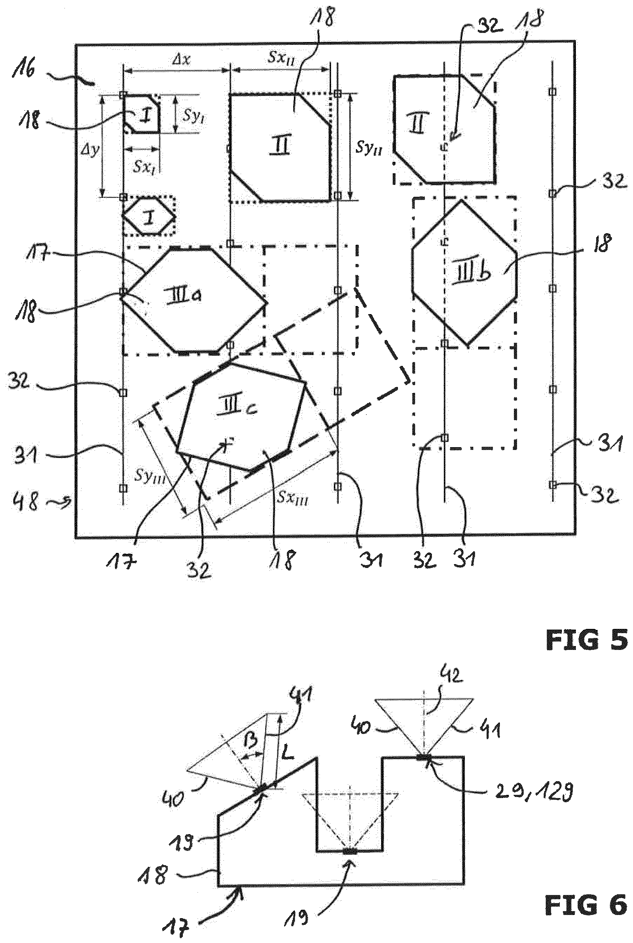

Fig. 5 bis 7 zeigt das Werkstück 16 mit mehreren mit dem Schneidwerkzeug 21 herauszutrennenden Werkstückteilen 18. Dabei weisen die herauszutrennenden Werkstückteile 18 unterschiedliche Grössen auf und definieren den Schneidplan 48. Die herauszutrennenden Werkstückteile 18 weisen jeweils eine Schneidkontur 17 auf und liegen auf den Auflagepunkten 32 der Werkstückelemente 31 der Strahlschneidvorrichtung 15 auf. Es versteht sich, dass die dargestellten Werkstückteile 18 zwecks Einfachheit nur eine sehr einfache Form der Schneidkonturen 17 aufweisen. Das erfindungsgemässe Verfahren lässt sich auf beliebige Werkstückteil- bzw. Schneidkonturformen anwenden. Insbesondere sind auch Werkstückteile 18 möglich, die ein oder mehrere Löcher bzw. Ausschnitte beliebiger Grösse und Form aufweisen, wobei die Anschnitt- bzw. Freischnittpunkte (29, 129) dieser Löcher bzw. Ausschnitte selbst auch wieder mittels des erfindungsgemässen Verfahrens optimiert und kippsicher ausgewählt werden können. Die Schneidkontur 17 kann, je nach vorhandener Kippstabilität beim Freischneiden des herauszutrennenden Werkstückteils 18, in Bereiche unterschiedlichen Kipprisikos aufgeteilt werden. Beispielsweise kann es einen Risikobereich 28, einen risikoarmen Bereich 75 und einen risikofreien Bereich 80 in der Schneidkontur 17 geben. Im Risikobereich 28 besteht ein nahezu 100-prozentiges Kipprisiko, wenn das Werkstück in diesem Risikobereich 30 freigeschnitten wird. Im risikofreien Bereich 80 besteht hingegen kein Risiko, dass das Werkstückteil 18 kippt, wenn es in diesem risikofreien Bereich 80 freigeschnitten wird.

Die Auflageelemente 31 sind in einer Dimension mit dem Abstand $\Delta x$ beabstandet. Die Auflagepunkte 32 sind entlang der Auflageelemente 31 in einer weiteren Dimension mit dem Abstand $\Delta y$ beabstandet. Die herauszutrennenden Werkstückteile 18 können nach deren Konturgrösse in Klassen eingeteilt sein, wobei die herauszutrennenden Werkstückteile 18 von möglichst flächenkleinsten Rechtecken umgeben werden, welche achsenparallel oder nicht achsenparallel sind. Dabei sind die Flächengrössen der Rechtecke mithilfe deren Seitenlängen $Sx_i$ und $Sy_i$ definiert. Jene herauszutrennenden Werkstückteile 18, welche vom flächenkleinsten Rechteck mit Seitenlängen $Sx_I$ und $Sy_I$ umgeben werden können, sind der Konturgrössenklasse I zugeteilt. Dabei sind jene zu trennenden Werkstückteile 18 der Konturgrössenklasse I zugeteilt, welche in beiden Dimensionen bzw. Seitenlängen $Sx_I$ und $Sy_I$ kleiner sind als ein definierter bzw. parametrierbarer Bruchteil der Rastermasse der Werkstückauflage d.h. der Abstände $\Delta x$ und $\Delta y$. Jene herauszutrennenden Werkstückteile 18, welche vom flächenkleinsten Rechteck mit dessen Seitenlängen $Sx_I$ und $Sy_I$ nicht umgeben werden können, werden mit einem Rechteck grösserer und somit grösserer Flächengrösse umgeben und somit der nächstgrösseren Konturgrössenklasse II zugeteilt. Dabei sind die Seitenlängen $Sx_{II}$ und Syn wiederum durch einen parametrierbaren Bruchteil der Abstände $\Delta x$ und $\Delta y$ definiert. Jene herauszutrennenden Werkstückteile 18, welche von den beiden vorab definierten Rechtecken nicht umgeben werden können, werden der nächstgrösseren Konturgrössenklasse III mit den Seitenlängen $Sx_{III}$ und Sym zugeteilt. Dabei sind beliebig viele Konturgrössenklassen denkbar. Zusätzlich ist innerhalb der jeweiligen Konturgrössenklassen zwischen jenen herauszutrennenden Werkstückteilen 18 zu unterscheiden, welche beispielsweise von einem achsenparallelen Rechteck umgeben werden lila und IIIb, sowie jene herauszutrennenden Werkstückteilen 18, welche von einem nicht achsenparallelen Rechteck umgeben werden IIIc. Damit lässt sich ohne weitere Schritte des erfindungsgemässen Verfahrens, insbesondere ohne Kenntnis der tatsächlichen Auflagesituation und Ermittlung eines Risikobereichs das Kippverhalten heuristisch abschätzen. Je nach Konturgrössenklasse können auch automatische Mikrostege 43 in der Schneidkontur 17 gesetzt werden oder eine Zerkleinerung von grösseren Löchern bzw. Ausschnitten durchgeführt werden. Vorteilhafterweise können alle in die Konturgrössenklasse I eingeteilten Werkstückteile 18, welche alle nach dem Freischnitt mit hundertprozentiger Sicherheit durch die Werkstückauflage hindurchfallen, von den erfindungsgemässen Verfahrensschritten b) bis e) ausgenommen werden, was die benötigte Berechnungszeit massiv senkt.

Wie in Fig. 6 gezeigt, ist die Auswahl des Anschnittpunkts 29 bzw. des Freischnittpunkts 129 für das Schneidwerkzeug 21 an der Schneidkontur 17 des zu trennenden Werkstückteils 18 von der Geometrie der Schneidkontur 17 abhängig und wird mithilfe der Selektionsgeraden 40 und 41 bestimmt, welche zu der Schneidkonturpunktnormalen 42 um den Selektionswinkel $\beta$ geneigt sind. Dabei führt das Überschneiden der Selektionsgerade 41 mit einem zum Schneidkonturpunkt 19 benachbarten weiteren Schneidkonturpunkt 19 zu einem Ausscheiden des Schneidkonturpunkts als Anschnittpunkt 29 oder Freischnittpunkt 129. Dabei werden die Selektionsgeraden 40 und 41 bzw. der Selektionswinkel $\beta$ von einem Schneidwerkzeugparameter, beispielsweise durch den Ausströmungskegelwinkel oder durch den Hüpfwinkel beim fliegenden Positionieren, bestimmt und sind abhängig vom Schneiddüsentyp am Schneidwerkzeug 21. Die gezeigten Selektionsgeraden 40 und 41 sind Bestandteil eines gleichschenkeligen Dreiecks, wobei die Länge L der Selektionsgeraden 40 und 41 den Wirkungsbereich des Schneidstrahls 34 des Schneidwerkzeugs 21 repräsentiert.

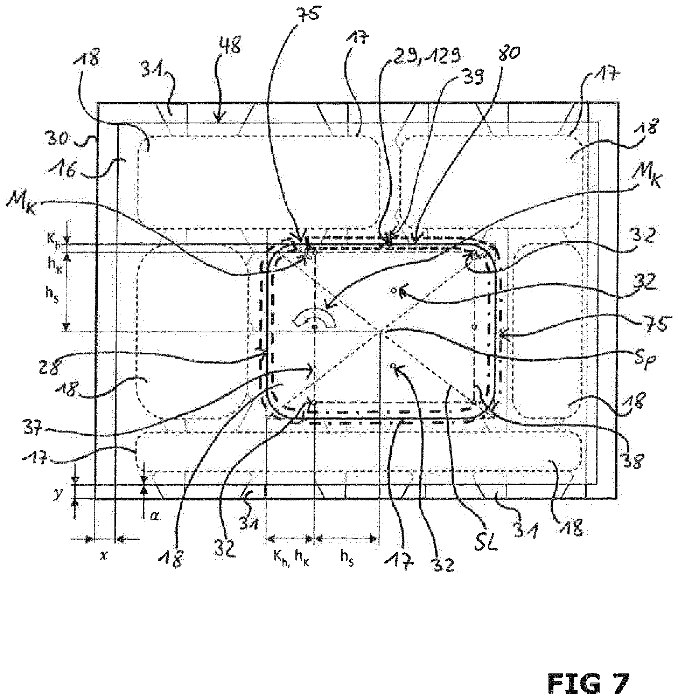

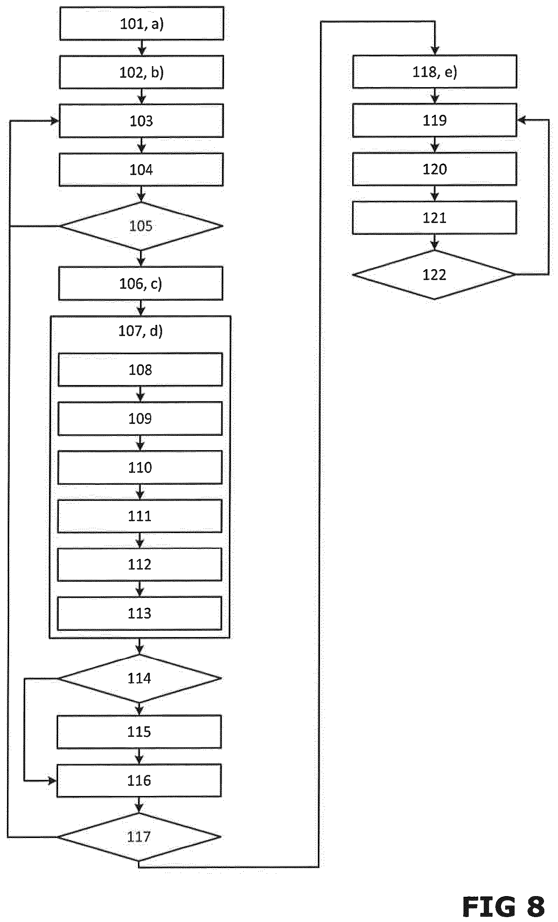

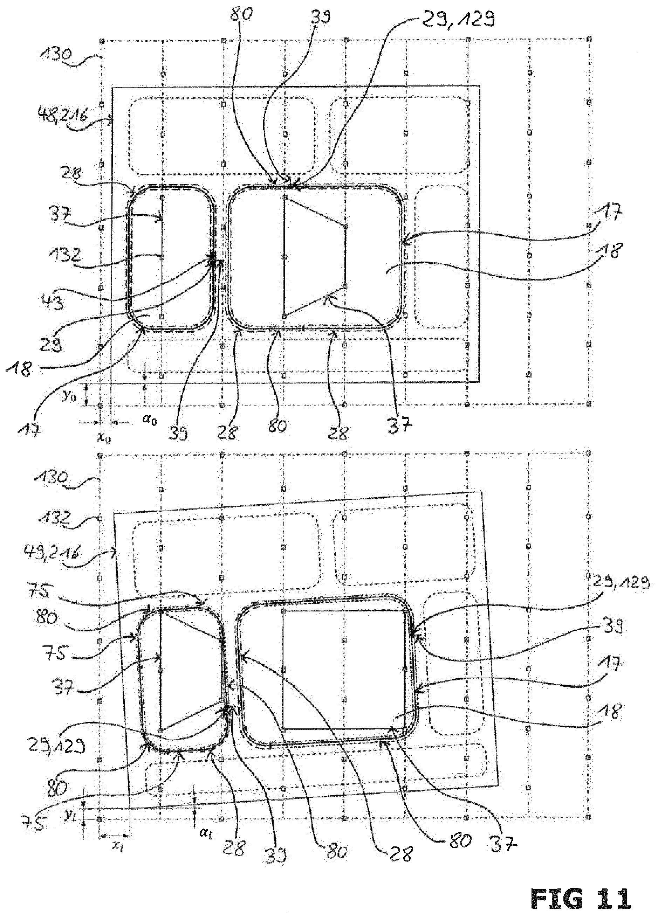

Eine erste Ausführungsform des erfindungsgemässen Verfahrens wird mithilfe der Fig. 7 und der darin gezeigten Auflagesituation des zentral angeordneten herauszutrennenden Werkstückteils 18 im Werkstück 16 mit dem vorab beschriebenen Schneidwerkzeug 21 der Strahlschneidvorrichtung 15 beschrieben und in dem Flussdiagramm gemäss Fig. 8 dargestellt. Des Weiteren werden Beispiele für unterschiedliche Auflagesituationen von Werkstückteilen 18 anhand der Fig. 11 aufgezeigt.

In einem ersten Schritt 101 erfolgt das Festlegen zumindest eines Schneidplans 48 für das Werkstück 16 mit wenigstens einer Schneidkontur 17 für zumindest ein, aus dem Werkstück 16 herauszutrennendes Werkstückteil 18 (gemäss Schritt a)).

Anschliessend erfolgt im zweiten Schritt 102 das Ermitteln der relativen Lage x, y und/oder Ausrichtung $\alpha$ des Werkstücks 16 bzw. des herauszutrennenden Werkstückteils 18 in Bezug auf die Werkstückauflage 30 (gemäss Schritt b)). Das Ermitteln der relativen Lage des Werkstücks 16 bzw. des herauszutrennenden Werkstückteils 18 in Bezug auf die Werkstückauflage 30 erfolgt mit der Erkennungseinrichtung 27. Die Erkennungseinrichtung 27 detektiert beispielsweise eine Kante des Werkstücks 16. Alternativ oder ergänzend erfolgt Schritt 102 mithilfe zumindest eines mechanischen Anschlags auf der Werkstückauflage 30.

Anschliessend erfolgt in Schritt 103 die Bestimmung der Konturgrösse eines ersten herauszutrennenden Werkstückteils 18, wobei das herauszutrennende Werkstückteil 18 jeweils von einem achsenparallelen Rechteck oder einem flächenkleinsten nicht achsenparallelen Rechteck eingefasst wird.

Anschliessend erfolgt in Schritt 104 mithilfe der vorab bestimmten Konturgrösse des zu trennenden Werkstückteils 18 die Zuordnung des Werkstückteils 18 zu einer zuvor definierten, parametrierbaren Konturgrössenklasse I bis III. Die zuvor definierten Konturgrössenklassen I bis III unterteilen die herauszutrennenden Werkstückteile 18 in jene Werkstückteile 18, welche in der folgenden Risikobereichsermittlung berücksichtigt werden müssen (Konturgrössenklasse II bis und III) sowie jene, welche von der folgenden Risikobereichsermittlung unberücksichtigt bleiben (Konturgrössenklasse I). Dabei bleiben jene herauszutrennenden Werkstückteile 18 unberücksichtigt, welche aufgrund ihrer Werkstückteilgrösse beim Freischneiden von selbst durch den Raum zwischen den Auflageelementen 31 durchfallen. Weitere Konturgrössenklassen, beispielsweise Konturgrössenklasse IV, sind je nach Schneidplan 48 nicht ausgeschlossen.

Sofern das herauszutrennende Werkstückteil 18 des Werkstücks 16 der Konturgrössenklasse I zugeordnet wird, werden die Schritte 103 und 104 solange wiederholt, bis ein zu trennendes Werkstückteil 18 am Schneidplan 48 ausgewählt wurde, welches einer Konturgrössenklasse II oder höher zugeordnet wurde (Schritt 105).

Anschliessend erfolgt in Schritt 106 das Ermitteln von relativen Positionen der Auflagepunkte 32 der Werkstückauflage 30, unterhalb des herauszutrennenden Werkstückteils 18 (gemäss Schritt c)).

Anschliessend erfolgt in Schritt 107 das Ermitteln von Risikobereichen 28 an der Schneidkontur 17 des herauszutrennenden Werkstückteils 18. In diesen Risikobereichen 28 ist bei einem Freischneiden des Werkstückteils ein Kippen des herauszutrennenden Werkstückteils 18 sehr wahrscheinlich (gemäss Schritt d)).

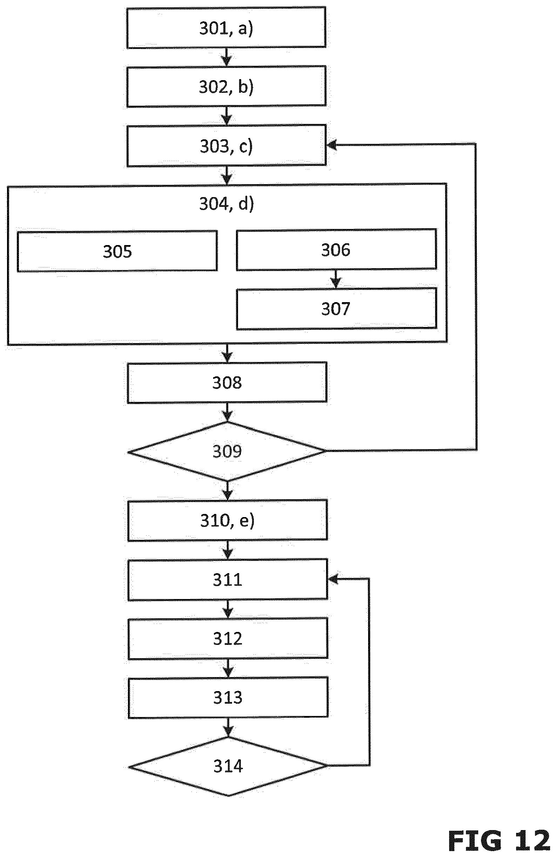

Zur Ermittlung von Risikobereichen 28 kann entweder eine mechanische Berechnung durchgeführt werden, wie in den folgenden Teilschritten 108-113 beschrieben wird, oder es können alternativ einfache Suchverfahren durchgeführt werden, welche weiter unten in einer dritten Ausführungsform des erfindungsgemässen Verfahrens anhand der Fig. 12 ausgeführt werden. Die mechanische Berechnung ermöglicht eine sehr genaue Ermittlung des tatsächlich zu erwartenden Kippverhaltens.

Zur Ermittlung von Risikobereichen 28 basierend auf der mechanischen Berechnung wird in einem ersten Teilschritt 108 zumindest eine Bearbeitungskraft $F_B$ bestimmt, welche abhängig von Schneidparametern des Schneidwerkzeugs 21 ist. Die Schneidparameter umfassen dabei einen oder mehrere Schneidwerkzeugparameter und/oder Positionierungsparameter. Vorteilhafterweise wird abhängig von zumindest einem Schneidparameter, insbesondere Positionierungsparameter, zumindest eine minimale und eine maximale Bearbeitungskraft $F_{B,min}$, $F_{B,max}$ bestimmt, welche je nach anzusteuernder Einstellwerte der Schneidparameter im Zeitpunkt des Freischneidens auf das Werkstückteil 18 wirken können.

Alternativ wird ergänzend die Bearbeitungskraft $F_B$ an einem zum jeweiligen Schneidkonturpunkt 19 benachbarten Schneidkonturpunkt der Schneidkontur 17 bestimmt.

Anschliessend erfolgt in Teilschritt 109 die Ermittlung des Schwerpunkts $S_P$ des herauszutrennenden Werkstückteils 18 als Werkstückteilparameter. Alternativ dazu könnten auch eine oder mehrere Schwerelinien $S_L$ ermittelt werden.

In einem weiteren Teilschritt 110 werden anschliessend Auflagelinien 38 des Auflagepolygons 37 als Polygonparameter innerhalb des herauszutrennenden Werkstückteils 18 bestimmt und die Anzahl von Eckpunkten des Auflagepolygons 37 als Polygonparameter bestimmt. Dabei werden jene Auflagepunkte 32 innerhalb des herauszutrennenden Werkstückteils 18 miteinander virtuell verbunden, welche der Schneidkontur 17 am nächsten sind, bzw. es wird das konvexe umfassende Polygon 37 aller Auflagepunkte 32 gebildet, welche innerhalb des betrachteten herauszutrennenden Werkstückteils 18 liegen.

In einem weiteren Teilschritt 111 erfolgt das Bestimmen einer zulässigen Kraft Fz an mehreren Schneidkonturpunkten 19 der Schneidkontur 17 des zu trennenden Werkstückteils 18, wobei die zulässige Kraft Fz, diejenige Kraft darstellt, welche, sofern auf den entsprechenden Schneidkonturpunkt 19 ausgeübt, gerade zum Kippen des Werkstückteils 18 um die zugeordnete Auflagelinie 38 führen würde. Vorteilhafterweise wird die zulässige Kraft für eine beispielsweise gleichmässig beabstandete Teilmenge von Schneidkonturpunkten 19 der Schneidkontur 17, welche paarweise nahe beieinanderliegen, berechnet. Die zulässige Kraft Fz wird für jede der für diesen Schneidkonturpunkt 19 bestimmten Auflagelinien 38 aus der statischen Momentengleichung wie folgt bestimmt:

$$F_z = F_S \frac{h_S}{h_K}, \qquad\qquad (Gl.1)$$

wobei $F_S$ die Gewichtskraft am Schwerpunkt Sp des zu trennenden Werkstückteils 18 ist, $h_S$ der Abstand von der Auflagelinie 38 zum Schwerpunkt $S_P$ ist und $h_K$ der Abstand von der Auflagelinie 38 bis zum Schneidkonturpunkt 19 der Schneidkontur 17 ist. Letzterer Abstand $h_K$ wird auch als Kipphebel $K_h$ bezeichnet. Die am jeweiligen Schneidkonturpunkt 19 schlussendlich geltende zulässige Kraft Fz wird als die minimale aller mit unterschiedlichen Auflagelinien 38 berechneten zulässigen Kräften Fz bestimmt.

Anschliessend erfolgt in einem weiteren Teilschritt 112 für den jeweiligen Schneidkonturpunkt 19 der Schneidkontur 17 ein Kräftevergleich der zulässigen Kraft Fz mit der zuvor bestimmten Bearbeitungskraft $F_B$ am jeweiligen Schneidkonturpunkt 19 der Schneidkontur 17 des herauszutrennenden Werkstückteils 18. Im Kräftevergleich werden Teilmengen von Schneidkonturpunkten 19 der Schneidkontur 17 ausgewählt, beispielsweise ein risikoarmer Bereich 75 für welche die zulässige Kraft Fz zumindest einen minimalen Kippkraftschrankenwert überschreitet, beispielsweise eine minimale Bearbeitungskraft $F_{B,min}$, und/oder ein risikofreier Bereich 80 von Schneidkonturpunkten der Schneidkontur, für welche die zulässige Kraft zumindest einen maximalen Kippkraftschrankenwert überschreitet, beispielsweise die maximale Bearbeitungskraft $F_{B,max}$. Diejenigen Schneidkonturpunkte 19, für welche die zulässige Kraft Fz selbst den minimalen Kippkraftschrankenwert nicht überschreitet, bilden den oder die Risikobereiche 28, in welchen später kein Freischnittpunkt 129 bestimmt werden darf bzw. kein Freischneiden erfolgen darf.

In einem weiteren Teilschritt 113 werden die zuvor bestimmten risikoarmen Bereiche 75 von Schneidkonturpunkten 19 und/oder risikofreien Bereiche 80 weiter eingeschränkt, indem bestimmte Konturbereiche aufgrund ungünstiger Konturgeometrie ausgeschlossen werden. Ungünstige Konturbereiche liegen beispielsweise bei engen konkaven Konturbereichen vor, oder wenn die Schneidkontur 17 im Wirkungsbereich des Schneidstrahls 34 deutlich konkav ist.

Generell ist ein Konturbereich ungünstig zur Platzierung eines Anschnitt- bzw. Freischnittpunkts, wenn durch die Positionierbewegung das freigeschnittene Werkstückteil 18 deutlich länger im Interaktionsbereich des Schneidstrahls 34 verharrt, als dies bei einem geraden Konturbereich der Fall wäre. Der Ausschluss von ungünstigen Konturbereichen kann mit dem Verfahren gemäss Fig. 6 erfolgen (Selektionsgeraden 40, 41) oder mittels einer über mehrere Schneidkonturpunkte 19 der Schneidkontur 17 gemittelten Schneidkonturkrümmung, oder mittels einer im Radius des Wirkungsbereichs 34 eines Schneidwerkzeugparameters, beispielsweise des Schneidgasdrucks, gemittelten positiven und negativen Schneidkonturkrümmung.

An jedem Schneidkonturpunkt 19 dieser nunmehr eingeschränkten Bereiche kann später ein Anschnittpunkt 29 oder ein Freischnittpunkt 129 bestimmt werden; in den eingeschränkten risikofreien Bereichen ein Freischnittpunkt 129 bzw. Anschnittpunkt 29 ohne jegliche Bedingungen an die Schneidparameter insb. Positionierungsparameter, also auch mit solchen Schneidparametern bzw. Positionierungsparametern, welche eine maximale Bearbeitungskraft $F_{B,max}$ erzeugen; in den eingeschränkten risikoarmen Bereichen ein Freischnittpunkt 129 bzw. Anschnittpunkt 29 mit Positionierungsparametern des Schneidwerkzeugs, welche eine minimale Bearbeitungskraft $F_{B,min}$ oder zumindest deutlich geringere Bearbeitungskraft als die maximale Bearbeitungskraft $F_{B,max}$ erzeugen.

In einem weiteren Schritt 114 wird überprüft, ob das Werkstückteil 18 ohne Verkippen aus dem Werkstück 16 geschnitten werden kann.

Ist dies nicht der Fall, weil insbesondere der Risikobereich 28 die ganze Schneidkontur 17 umfasst (wie anhand des linken Werkstückteils im oberen Schneidplan in Fig. 11 dargestellt), wird in einem weiteren Schritt 115 entweder eine Neupositionierung des Werkstückteils 18 vorgenommen, wobei nach dessen Neupositionierung die Schritte 106 bis 113 wiederholt werden (entweder unmittelbar anschliessend oder nach vorgängigem Abarbeiten aller weiterer Werkstückteile 18 des Werkstücks 16), oder es wird ein Mikrosteg 43 am zu trennenden Werkstückteil 18 gesetzt (wie anhand des linken Werkstückteils im oberen Schneidplan in Fig. 11 dargestellt). Beide Massnahmen in Schritt 115 ermöglichen später ein kippsicheres Schneiden des Werkstückteils 18. Alternativ kann eine Neupositionierung des Werkstücks 16 vorgenommen werden, oder eine neue Positionierung zumindest eines der Auflagepunkte 32, welcher innerhalb des Werkstücks 16 liegt.

Anschliessend werden in Schritt 116 die Koordinaten $x_A$, $y_A$ aller nunmehr bestimmten möglichen Anschnittpunkte 29 bzw. Koordinaten $x_F$, $y_F$ der bestimmten möglichen Freischnittpunkte 129 des herauszutrennenden Werkstückteils 18 in einer Speichereinrichtung 50 der Schneidvorrichtung 15 oder einer externen Speichereinrichtung 250 gespeichert. Bevorzugt werden alle im Schritt 113 eingeschränkten risikoarmen Bereiche 75 und alle eingeschränkten risikofreien Bereiche 80 des herauszutrennenden Werkstückteils 18 gespeichert.

Die Schritte 103 bis 116 werden solange wiederholt, bis alle Werkstückteile 18 des Werkstücks 16 abgearbeitet sind (Schritt 117).

Anschliessend wird im Schritt 118 (Schritt e)) ein bzw. zumindest ein Anschnittpunkt 29 und/oder ein Freischnittpunkt 129 für das Schneidwerkzeug 21 an der Schneidkontur 17 des zumindest einen herauszutrennenden Werkstückteils 18, unter Berücksichtigung des zumindest einen erkannten Risikobereichs 28 an der Schneidkontur 17 des zumindest einen herauszutrennenden Werkstückteils 18 bestimmt. Vorzugsweise wird eine Abfolge von wenigstens zwei Anschnittpunkten 29 und/oder Freischnittpunkten 129 für das Schneidwerkzeug 21 an den Schneidkonturen 17 von zumindest zwei in der Abfolge nacheinander herauszutrennenden Werkstückteilen 18, unter Berücksichtigung von mehr als einem erkannten Risikobereich 28 an den Schneidkonturen 17 der zumindest zwei in der Abfolge nacheinander herauszutrennenden Werkstückteile 18 bestimmt. Die nacheinander herauszutrennenden Werkstücke liegen dabei bevorzugt benachbart zueinander bzw. sind nebeneinander angeordnet. Die Werkstückteile 18 werden derart ausgewählt, dass der dazwischenliegende Positionierungsweg frei von geschnittenen Werkstückteilen ist. Das bedeutet, dass auf dem dazwischenliegenden Positionierungsweg keine bereits geschnittenen Werkstückteile 18 überfahren werden.

Vorzugsweise werden alle gespeicherten Anschnittpunkte 29 bzw. Freischnittpunkte 129 der herauszutrennenden Werkstückteile 18 am Werkstück 16 zum Optimieren der Schneidreihenfolge und des Positionierungswegs des Schneidwerkzeugs 21 am Werkstück 16 gereiht und der in Bezug auf den erkannten Risikobereich optimale Anschnittpunkt und/oder Freischnittpunkt ausgewählt wie nachfolgend erläutert wird. Dabei werden diese bestimmten Anschnittpunkte 29 bzw. Freischnittpunkte 129 der herauszutrennenden Werkstückteile 18 am Werkstück 16 so gereiht, dass im folgenden Schneidprozess einerseits keine bereits aus dem Werkstück 16 herausgetrennten Werkstückteile im Positionierungsweg des Schneidwerkzeugs 21 liegen und andererseits der Positionierungsweg minimiert wird.

Damit kann in diesem Schritt 118 eine Optimierungsroutine für die Schneidreihenfolge und den Positionierweg aus sämtlichen Schneidkonturbereichen der, allenfalls eingeschränkten, risikoarmen und risikofreien Bereiche 75, 80 für jede Schneidkontur 17 jedes Werkstückteils 18 einen bestimmten Anschnittpunkt 29 so auswählen (Schritt e)), dass eine optimale Schneidreihenfolge und ein minimaler Positionierweg ermöglicht werden, ohne dass dabei Werkstückteile unmittelbar beim Freischnitt oder während der nachfolgenden Positionierungsbewegung verkippen.

Anschliessend wird im Schritt 119 ein Schneidprozess mit dem Schneidwerkzeug 21 und für das zu bearbeitende Werkstück 16 adäquaten Schneidwerkzeugparametern ausgeführt, welcher an dem nunmehr einen bestimmten Anschnittpunkt 29 des ersten herauszutrennenden Werkstückteils startet oder einmündet, entlang der Schneidkontur 17 geführt wird und, sofern kein Mikrosteg 43 aufgrund fehlender Kippstabilität vorgesehen ist, an dem entsprechend gleichen Schneidkonturpunkt, dem Freischnittpunkt 129, endet.

Anschliessend wird im Schritt 120 unmittelbar nach dem Freischnitt des Werkstückteils 18 eine Positionierungsbewegung mit dem Schneidkopf 20 weg vom Freischnittpunkt 129 ausgeführt. Ist der Freischnitt in einem risikoarmen Schneidkonturbereich 75 erfolgt, wird das entsprechende schonende dreiachsige Positionierverfahren mit den entsprechenden Positionierungsparametern ausgeführt. Ist der Freischnitt in einem risikofreien Schneidkonturbereich 80 erfolgt, kann auch das zweiachsige Positionierverfahren ausgeführt werden. Die Wahl des passenden Positionierungsverfahrens mit den passenden Positionierungsparametern durch die Steuereinrichtung 60 weg vom Freischnittpunkt 129 garantiert, dass die in Schritt 108 berechnete Bearbeitungskraft $F_B$ bzw. minimale Bearbeitungskraft $F_{B,min}$ oder maximale Bearbeitungskraft $F_{B,max}$ nicht überschritten wird.

Sofern das Werkstück 16 mehrere herauszutrennende Werkstückteile 18 aufweist, wird in einem weiteren Schritt 121 der nächstgereihte Anschnittpunkt 29 und somit das nächstgereihte Werkstückteil 18 vom Schneidkopf 20 angefahren.

Die Schritte 119 bis 121 werden solange wiederholt, bis alle herauszutrennenden Werkstückteile 18 aus dem Werkstück 16 herausgetrennt sind (Schritt 122).

Die zuvor offenbarten Verfahrensschritte und Elemente werden in einer zweiten Ausführungsform in einem virtuellen Raum abgebildet, wobei beispielsweise die Werkstückauflage 30 mit allen Auflagepunkten 32 virtuell ist und der zumindest eine Schneidplan 48 zumindest eine Information zur Lage und/oder Ausrichtung der virtuellen Werkstückauflage 130 relativ zum virtuellen Werkstück 216 aufweist, wobei unter dem virtuellen Werkstück 216 die Abmessungen des später zu verwendenden tatsächlichen Werkstücks 16 verstanden werden, was sinngleich ist mit den Abmessungen der Werkstücktafel, welche im Schneidplan 48 abgebildet ist.

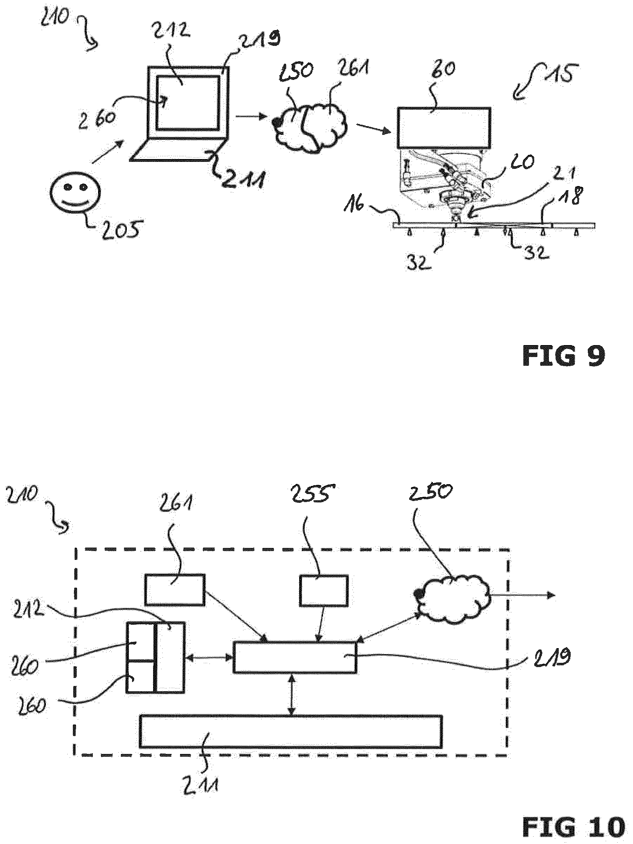

Wie in den Fig. 9 bis Fig. 11 gezeigt, lässt sich das zuvor offenbarte erfindungsgemässe Verfahren somit als computerimplementiertes Verfahren zum automatischen Bestimmen und Erzeugen von Geometrieelementen und/oder Bewegungsbefehlen zum Steuern des Schneidwerkzeugs 21 und des Schneidkopfs 20 einer Strahlschneidvorrichtung 15 darstellen und ausführen. Dafür ist ein Computer 210 mit einer Eingabeeinrichtung 211 und einem Computerprozessor 219 vorgesehen. Der Computer 210 ist direkt an der Strahlschneidvorrichtung 15 angeordnet oder davon beabstandet, und damit verbindbar. Insbesondere kann der Computer 210 in der Strahlschneidvorrichtung 15 integriert sein, oder die Steuerungssoftware einer oder mehrerer Komponenten der Steuereinrichtung 60 kann teilweise auf dem Computer 210 integriert sein. Der Computer 210 kann aber auch unabhängig von der Strahlschneidvorrichtung das computerimplementierte Verfahren ausführen.

Der Computer 210 beinhaltet ein Softwarepaket 212 mit mehreren Softwareapplikationen 260 und einer Automatisierungssoftware 261, welche im Computerprozessor 219 ausgeführt werden. Alternativ kann, wie in Fig. 9 dargestellt, eine Automatisierungssoftware 261 als Clouddienst ausgeführt werden. Die virtuellen Schritte des erfindungsgemässen Verfahrens sind in der Automatisierungssoftware 261 als computerimplementiertes Verfahren implementiert. Dabei können die virtuellen Schritte zur Optimierung der Anschnittpunkte 29 und der Schneidreihenfolge der Werkstückteile 18 des Werkstücks 16, 216 bzw. des Schneidplans 48 rein auf Geometrieebene mittels Erzeugen und/oder Verschieben von Geometrieelementen der Anschnittkonturen 39 implementiert sein, oder es können zugleich Bewegungsbefehle für das Schneidwerkzeug 21 generiert werden.

Gemäss Schritt a) kann der Benutzer 205 einen Schneidplan 48 mit Geometrieelementen und/oder Bewegungsbefehlen für das Schneidwerkzeug 21 erstellen. Dafür verwendet der Benutzer 205 eine geeignete Softwareapplikation 260, beispielsweise ein CAD-Programm (Computer-Aided-Design). Der Schneidplan 48 wird im Computer 210 und in einer darin angeordneten Speichereinrichtung 250 oder in einer externen Speichereinrichtung 250 gespeichert. Alternativ kann der Schneidplan 48 aus einer externen Speichereinrichtung 250 geladen werden, ohne dass der Benutzer 205 ihn explizit erstellt.

In einer ersten Phase läuft das erfindungsgemässe Verfahren zur Optimierung eines oder mehrerer Schneidpläne, welches in der Automatisierungssoftware implementiert ist, gemäss den Schritten b) und c) wie folgt ab:
Die Automatisierungssoftware 261 im Computer 210 empfängt eine, in einer Werkstückauflagenbibliothek 255 des Computers 210 gespeicherte, virtuelle Werkstückauflage 130. Die virtuelle Werkstückauflage 130 definiert dabei die Vielzahl an Auflagepunkten 132, welche die tatsächliche Werkstückauflage 30 aufweist. Zudem empfängt die Automatisierungssoftware 261 die zum Schneidplan 48 gehörende Information über die relative Lage xo, yo und/oder Ausrichtung $\alpha_0$. Diese Information stammt entweder von der Steuereinrichtung 60, welche in diesem Fall mittels der Erkennungseinrichtung 27 am realen Werkstück 16 erfasst wurde, also die tatsächliche relative Lage x, y und/oder Ausrichtung a, oder sie wird im virtuellen Fall durch die Automatisierungssoftware 261 als initiale Nulllage selbst festgelegt.

Optional initialisiert die Automatisierungssoftware eine Schar von Schneidplänen 48, 49 mit zumindest einem weiteren Schneidplan 49, wobei die relative Lage $x_i$, $y_i$ und/oder Ausrichtung $\alpha_i$ der virtuellen Werkstückauflage 130 in jedem Schneidplan 48, 49 der Schar verschieden und in x- und y- Richtung versetzt ist, sowie punkto Ausrichtung verdreht sein kann. Vorzugsweise enthalten die Schneidpläne 49 der Schar die gleichen Werkstückteile 18 wie der Schneidplan 48, insbesondere ebenfalls die gleiche Anordnung der Werkstückteile 18 ggf. unter Beachtung der allfällig veränderten Risikobereiche welche sich aus der veränderten Lage der virtuellen Werkstückauflage relativ zum virtuellen Werkstück ergeben.

In einer zweiten Phase führt anschliessend die Automatisierungssoftware 261 für den Schneidplan 48 oder die weiteren Schneidpläne 49 der Schneidplanschar die erfindungsgemässen Schritte rein virtuell durch, die beispielhaft mit den Schritten 103 bis 118 (gemäss Fig. 8) dargestellt sind. Dabei werden der schlussendlich optimierte Schneidplan 48 oder die Schar von schlussendlich optimierten Schneidplänen 48, 49, in der Speichereinrichtung 250 gespeichert und unmittelbar anschliessend oder später an die Speichereinrichtung 50 übertragen. Damit findet das computerimplementierte Verfahren seinen Abschluss.

In einer dritten Phase erfolgt anschliessend der reale Bearbeitungsprozess auf der Strahlschneidvorrichtung 15, wobei entweder der eine optimierte Schneidplan 48 von der Steuereinrichtung 60 direkt abgearbeitet wird. Oder im Fall einer Schar von optimierten Schneidplänen wird zuerst mittels der Erkennungseinrichtung 27 die tatsächliche relative Lage x, y und/oder Ausrichtung $\alpha$ des Werkstücks 16 in Bezug auf die Werkstückauflage 30 erfasst, anschliessend wird ein passender Schneidplan 49 ausgewählt und danach wird der Bearbeitungsprozess auf der Strahlschneidvorrichtung 15 entsprechend dem ausgewählten Schneidplan 49 bzw. den entsprechenden Bewegungsbefehlen durchgeführt.

Dabei wird jener Schneidplan 48, 49 aus der Schar von Schneidplänen 48, 49 ausgewählt, welcher die grösste Übereinstimmung der zumindest einen Information zur Lage $x_i$, $y_i$ und/oder Ausrichtung $\alpha_i$ des zumindest einen herauszutrennenden Werkstückteils (18) relativ zur virtuellen Werkstückauflage 130 mit der tatsächlichen Lage x, y und/oder tatsächlichen Ausrichtung $\alpha$ der Werkstückauflage 30 der Strahlschneidvorrichtung 15 aufweist. Der Schneidplan 48 kann dabei hinsichtlich der tatsächlichen Lage x, y und/oder tatsächlichen Ausrichtung $\alpha$ der Werkstückauflage 30 relativ zum Werkstück 16 noch weiter optimiert werden, in dem zumindest die Risikobereiche 28 mittels der Automatisierungssoftware 261 erneut bestimmt werden und bei Abweichungen, die Anschnittpunkte und/oder Freischnittpunkte neu gesetzt werden.

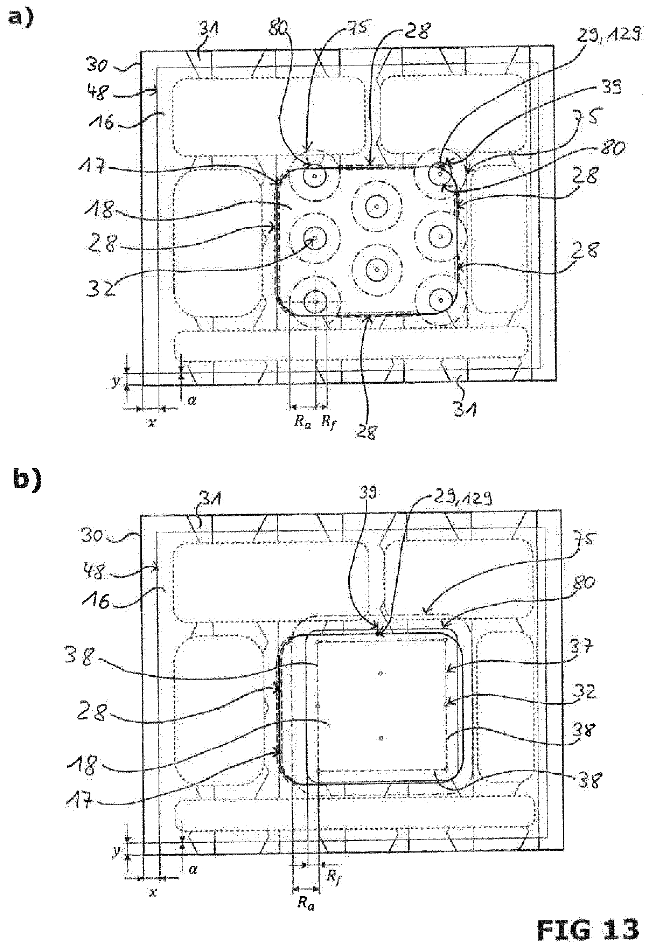

Eine dritte Ausführungsform des erfindungsgemässen Verfahrens wird in den Fig. 13 sowie im Flussdiagramm gemäss Fig. 12 veranschaulicht. Der hauptsächliche Unterschied zur ersten Ausführungsform besteht darin, dass die Bestimmung von Risikobereichen 28 der Schneidkontur 17 des zumindest einen Werkstückteils 18 mittels einfacher Suchverfahren durchgeführt wird. Dadurch werden weniger Rechenoperationen benötigt.

In einem ersten Schritt 301 (gemäss Schritt a)) erfolgt das Festlegen zumindest eines Schneidplans 48 für das zumindest eine herauszutrennende Werkstückteil 18 aus dem Werkstück 16.

Anschliessend erfolgt im Schritt 302 (gemäss Schritt b)) das Ermitteln der relativen Lage x, y und/oder Ausrichtung $\alpha$ des Werkstücks 16 in Bezug auf die Werkstückauflage 30, wobei das Ermitteln der relativen Lage und Ausrichtung mithilfe der Erkennungseinrichtung 27 und/oder zumindest einem mechanischen Anschlag auf der Werkstückauflage 30 erfolgt.

Anschliessend erfolgt in Schritt 303 (gemäss Schritt c)) das Ermitteln jedes der Auflagepunkte 32 der Werkstückauflage 30, welche unterhalb des zumindest einen Werkstückteils 18 angeordnet sind und deren relativen Positionen.

In einem weiteren Schritt 304 (gemäss Schritt d)) erfolgt das Ermitteln von Risikobereichen 28 an der Schneidkontur 17 des herauszutrennenden Werkstückteils 18. In diesen Risikobereichen 28 ist beim Freischneiden ein Kippen des herauszutrennenden Werkstückteils 18 sehr wahrscheinlich.

Dabei wird im ersten Teilschritt 305 eine einfache Suche von Schneidkonturpunkten 19 der Schneidkontur 17 in Nähe der sich unterhalb des Werkstücks 18 befindenden Auflagepunkte 32 durchgeführt, veranschaulicht in Fig. 13a). Liegen Schneidkonturpunkte 17 innerhalb von Kreisen mit Radius Rf, werden diese in risikofreie Schneidkonturbereiche 80 eingeteilt, in welchen später ein Anschnittpunkt 29 bzw. Freischnittpunkt 129 bestimmt werden kann, an welchem ein Freischnitt ohne Bedingungen, also mit einer beliebigen Positionierungsbewegung, insbesondere einer zweiachsigen Positionierungsbewegung mit maximaler Bearbeitungskraft $F_{B,max}$, erfolgen kann. Liegen weitere Schneidkonturpunkte 19 innerhalb von Kreisen mit Radius $R_a$, werden diese in risikoarme Schneidkonturbereiche 75 eingeteilt, in welchen später ein Anschnittpunkt 29 bzw. Freischnittpunkt 129 bestimmt werden kann, an welchem später ein Freischnitt unter Bedingungen, also im speziellen eine dreiachsige Positionierungsbewegung mit minimaler Bearbeitungskraft $F_{B,min}$, erfolgen kann. Weitere Kreise mit Radien zwischen Rf und $R_a$ können definiert werden, um weitere dazwischenliegende Schneidkonturbereiche zu bilden, welche Abstufungen von Bearbeitungskräften bzw. Positionierungsbewegungen mit anderen Positionierungsparametern nach dem Freischnitt abbilden bzw. ermöglichen. Sämtliche noch nicht eingeteilte Schneidkonturpunkte 19 der Schneidkontur 17 gehören zum Risikobereich 28 bzw. zu den Risikobereichen 28, an welchen später kein Anschnittpunkt 29 bzw. Freischnittpunkt 129 bestimmt werden darf.

Alternativ wird in einem ersten Teilschritt 306 das Auflagepolygon 37 als konvexes umfassendes Polygon aller Auflagepunkte 32 bestimmt, welche innerhalb des betrachteten herauszutrennenden Werkstückteils 18 liegen. Das Auflagepolygon 37 weist dabei mehrere Auflagelinien 38 als Verbindungsstrecken der Eckpunkte des Auflagepolygons 37 auf, wobei um diese Auflagelinien 38 ein Kippen des Werkstücks 18 nach dem Freischnitt erfolgen könnte.

Anschliessend wird in Teilschritt 307 alternativ zu Teilschritt 305 eine einfache Suche von Schneidkonturpunkten 19 der Schneidkontur 17 in Nähe der zuvor bestimmten Auflagelinien 38 durchgeführt, veranschaulicht in Fig. 13b).

Liegen Schneidkonturpunkte innerhalb einer Kontur, welche durch das Expandieren des Auflagepolygons 37 um den Radius $R_f$ zustande kommt, werden diese in risikofreie Schneidkonturbereiche 80 eingeteilt. Liegen weitere Schneidkonturpunkte 19 innerhalb einer Kontur, welche durch das Expandieren des Auflagepolygons 37 um den Radius $R_a$ zustande kommt, werden diese in risikoarme Schneidkonturbereiche 75 eingeteilt. Für die Bestimmung von weiteren dazwischenliegenden Schneidkonturbereichen und die entsprechende spätere Bestimmung von Anschnittpunkten 29 bzw. Freischnittpunkten 129 unter Berücksichtigung der ermittelten Schneidkonturbereiche gelten die gleichen Aussagen wie in Teilschritt 305. Sämtliche noch nicht eingeteilte Schneidkonturpunkte 19 der Schneidkontur 17 gehören zum Risikobereich 28 bzw. zu den Risikobereichen 28, an welchen später kein Anschnittpunkt 29 bzw. Freischnittpunkt 129 bestimmt werden darf.

Die in diesem Schritt 304 ermittelten Schneidkonturbereiche benötigen weder eine Bestimmung von Bearbeitungskräften, noch eine Berechnung von zulässigen Kräften an der Schneidkontur 17 des Werkstückteils 18, was eine besonders einfache Durchführung des Verfahrens ermöglicht.

Anschliessend werden in Schritt 308 die Koordinaten $x_A$, $y_A$ aller nunmehr bestimmten möglichen Anschnittpunkte 29 bzw. Koordinaten $x_F$, $y_F$ der bestimmten möglichen Freischnittpunkte 129 des herauszutrennenden Werkstückteils 18 in einer Speichereinrichtung 50 der Schneidvorrichtung 15 oder einer externen Speichereinrichtung 250 gespeichert. Dies sind alle möglichen Anschnittpunkte 29 bzw. Freischnittpunkte 129 in den vorgängig bestimmten risikoarmen und risikofreien Schneidkonturbereichen 75, 80 der Schneidkontur 17.

Die Schritte 303 bis 308 werden solange wiederholt, bis alle Werkstückteile 18 des Werkstücks 16 abgearbeitet sind (Schritt 309).

Anschliessend wird im Schritt 310 (Schritt e)) ein bzw. zumindest ein Anschnittpunkt 29 und/oder ein Freischnittpunkt 129 für das Schneidwerkzeug 21 an der Schneidkontur 17 des zumindest einen herauszutrennenden Werkstückteils 18, unter Berücksichtigung des zumindest einen erkannten Risikobereichs 28 an der Schneidkontur 17 des zumindest einen herauszutrennenden Werkstückteils 18 bestimmt. Vorzugsweise werden alle gespeicherten Anschnittpunkte 29 bzw. Freischnittpunkte 129 der herauszutrennenden Werkstückteile 18 am Werkstück 16 zum Optimieren der Schneidreihenfolge und des Positionierungswegs des Schneidwerkzeugs 21 am Werkstück 16 gereiht und der in Bezug auf den erkannten Risikobereich optimale Anschnittpunkt und/oder Freischnittpunkt ausgewählt wie nachfolgend erläutert wird. Damit kann in diesem Schritt eine Optimierungsroutine für die Schneidreihenfolge und den Positionierweg aus sämtlichen Schneidkonturbereichen der risikoarmen und risikofreien Bereiche 75, 80 für jede Schneidkontur 17 jedes Werkstückteils 18 einen bestimmten Anschnittpunkt 29 so auswählen (Schritt e)), dass eine optimale Schneidreihenfolge und ein minimaler Positionierweg ermöglicht werden, ohne dass dabei Werkstückteile unmittelbar beim Freischnitt oder während der nachfolgenden Positionierungsbewegung verkippen.

Anschliessend wird im Schritt 311 ein Schneidprozess mit dem Schneidwerkzeug 21 ausgeführt, welcher an dem nunmehr einen bestimmten Anschnittpunkt 29 des ersten herauszutrennenden Werkstückteils startet oder einmündet, entlang der Schneidkontur 17 geführt wird und an dem entsprechend gleichen Schneidkonturpunkt, dem Freischnittpunkt 129, endet.

Anschliessend wird im Schritt 312 unmittelbar nach dem Freischnitt des Werkstückteils 18 eine Positionierungsbewegung mit dem Schneidkopf 20 weg vom Freischnittpunkt 129 ausgeführt, wobei für die Positionierungsbewegung unmittelbar nach dem Freischnitt passende Positionierungsparameter verwendet werden, je nachdem der Freischnittpunkt 129 in einem risikoarmen Schneidkonturbereich 75 oder in einem risikofreien Schneidkonturbereich 80 erfolgt. Damit kann sichergestellt werden, dass das freigeschnittene Werkstückteil 18 nicht verkippt.

Sofern das Werkstück 16 mehrere herauszutrennende Werkstückteile 18 aufweist, wird in einem weiteren Schritt 313 der nächstgereihte Anschnittpunkt 29 und somit das nächstgereihte Werkstückteil 18 vom Schneidkopf 20 angefahren.

Die Schritte 311 bis 313 werden solange wiederholt, bis alle herauszutrennenden Werkstückteile 18 aus dem Werkstück 16 herausgetrennt sind (Schritt 314).

Es versteht sich, dass sich die dritte Ausführungsform des erfindungsgemässen Verfahrens ebenfalls als computerimplementiertes Verfahren gem. Fig. 9 bis Fig. 11 darstellen und ausführen lässt, wobei die Schritte der dritten Ausführungsform gemäss Fig. 12 vor oder während des tatsächlichen Bearbeitungsprozesses virtuell ablaufen. Insbesondere kann im Voraus eine Schar von Schneidplänen 48, 49 optimiert werden, welche später auf die Strahlschneidvorrichtung 15 transferiert werden. Vor dem Start des tatsächlichen Schneidprozesses wird dann zuerst Schritt b) ausgeführt, also das Ermitteln der tatsächlichen Lage x,y und/oder Ausrichtung $\alpha$ des Werkstücks 16 in Bezug auf die Werkstückauflage 30.

**Bezugszeichenliste**

15        Strahlschneidvorrichtung

| 16 | Werkstück |
|---|---|
| 17 | Schneidkontur |
| 18 | herauszutrennendes Werkstückteil |
| 19 | Schneidkonturpunkt |
| 20 | Schneidkopf |
| 21 | Schneidwerkzeug |
| 22 | Gestell von 15 |
| 23 | Brücke von 15 |
| 24 | Rahmen von 30 |
| 25 | Antriebe |
| 26 | Antriebssteuerung |
| 27 | Erkennungseinrichtung |
| 28 | Risikobereich(e) |
| 29 | Anschnittpunkt(e) |
| 30 | Werkstückauflage |
| 31 | Auflageelement(e) |
| 32 | Auflagepunkt(e) |
| 33 | Schneidstrahlsteuerung |
| 34 | Schneidstrahl mit kegelförmigem Wirkungsbereich |
| 35 | Rollen |
| 36 | Schneiddüse |
| 37 | Auflagepolygon |
| 38 | Auflagelinien |
| 39 | Anschnittkontur |
| 40 | Selektionsgerade |
| 41 | Selektionsgerade |
| 42 | Schneidkonturpunktnormalen |
| 43 | Mikrosteg |
| 48 | Schneidplan |
| 49 | weiterer Schneidplan |
| 50 | Speichereinrichtung von 15 |
| 60 | Steuereinrichtung |
| 75 | risikoarme Bereiche der Schneidkontur |
| 80 | risikofreie Bereiche der Schneidkontur |
| 101-122 | Verfahrensschritte der ersten Ausführungsform |
| 301-314 | Verfahrensschritte der dritten Ausführungsform |
| 129 | Freischnittpunkt |
| 130 | virtuelle Werkstückauflage |
| 132 | virtueller Auflagepunkt |
| 205 | Benutzer |
| 210 | Computer |
| 211 | Eingabeeinrichtung |
| 212 | Software paket |
| 216 | virtuelles Werkstück |
| 219 | Computerprozessor |
| 250 | externe Speichereinrichtung |
| 255 | Werkstückauflagenbibliothek |
| 260 | Softwareapplikation |
| 261 | Automatisierungssoftware |
| $F_z$ | zulässige Kraft |
| $F_B$ | Bearbeitungskraft |
| $F_{B,min}$ | minimale Bearbeitungskraft |
| $F_{B,max}$ | maximale Bearbeitungskraft |
| Fs | Gewichtskraft |
| $h_k$ | Abstand von 38 bis 19 |
| $S_P$ | Schwerpunkt |
| $S_L$ | Schwerelinie |
| hs | Abstand von 38 bis zum $S_P$ |

| $K_h$ | Kipphebel |
| $Mk$ | Kippmoment |
| $L$ | Länge von 40, 41 |
| $X, Y, Z$ | Antriebsachsen von 15 |
| $\beta$ | Selektionswinkel |
| $Sx_i$ | erste Seitenlängen umgebender Rechtecke |
| $Sy_i$ | zweite Seitenlängen umgebender Rechtecke |
| $\Delta x$ | Abstand zwischen Auflageelemente 31 |
| $\Delta y$ | Abstand zwischen Auflagepunkten 32 |
| $x_A, y_A$ | Koordinaten eines Anschnittpunkts |
| $x_F, y_F$ | Koordinaten eines Freischnittpunkts |
| I - III | Konturgrössenklassen |
| $x, y$ | tatsächliche Lage von 16 |
| $\alpha$ | tatsächliche Ausrichtung von 16 |
| $x_i, y_i$ | virtuelle Lage von 16 |
| $\alpha_i$ | virtuelle Ausrichtung von 16 |
| $R_f$ | Radius für 80 |
| $R_a$ | Radius für 75 |

**Patentansprüche**

**1.** Verfahren zur Steuerung einer Strahlschneidvorrichtung (15) mit einem Schneidwerkzeug (21) mittels dem zumindest ein Werkstückteil (18) aus einem Werkstück (16) entlang einer Schneidkontur (17) heraustrennbar ist, wobei die Strahlschneidvorrichtung (15) eine Werkstückauflage (30; 130) mit einer Mehrzahl an Auflagepunkten (32) zur Aufnahme eines Werkstücks (16) aufweist und das Verfahren folgende Schritte umfasst:

a) Festlegen zumindest eines Schneidplans (48) für das Werkstück (16) mit wenigstens einer Schneidkontur (17) für zumindest ein, aus dem Werkstück (16) herauszutrennendes Werkstückteil (18);
b) Ermitteln der relativen Lage und/oder Ausrichtung des Werkstücks (16) und/oder des Schneidplans (48) und/oder des zumindest einen herauszutrennenden Werkstückteils (18) in Bezug auf die Werkstückauflage (30; 130);
c) Ermitteln zumindest der relativen Position des zumindest einen Auflagepunkts (32) der Werkstückauflage (30; 130), unterhalb des zumindest einen herauszutrennenden Werkstückteils (18);
d) Ermitteln von zumindest einem Risikobereich (28) an der Schneidkontur (17) des zumindest einen herauszutrennenden Werkstückteils (18), bei welchem beim Freischneiden des zumindest einen herauszutrennenden Werkstückteils (18) an diesem Risikobereich (28) ein Kippen des zumindest einen herauszutrennenden Werkstückteils (18) möglich ist;
e) Bestimmen zumindest eines Anschnittpunkts (29) und/oder eines Freischnittpunkts (129) für das Schneidwerkzeug (21) an der Schneidkontur (17) des zumindest einen herauszutrennenden Werkstückteils (18), unter Berücksichtigung des zumindest einen erkannten Risikobereichs (28) an der Schneidkontur (17) des zumindest einen herauszutrennenden Werkstückteils (18), wobei der Anschnittpunkt bzw. der Freischnittpunkt am zumindest einen herauszutrennenden Werkstückteil so ausgewählt wird, dass beim Freischneiden bzw. Heraustrennen des zumindest einen herauszutrennenden Werkstückteils ein Kippen des zumindest einen herauszutrennenden Werkstückteils unterbunden wird.

**2.** Verfahren nach Anspruch 1, **dadurch gekennzeichnet, dass** spätestens im Schritt e) die Koordinaten ($x_A$, $y_A$) des zumindest einen bestimmten Anschnittpunkts (29) und/oder die Koordinaten ($x_F$, $y_F$) des zumindest einen bestimmten Freischnittpunkts (129) in einer Speichereinrichtung (50, 250) gespeichert werden.

**3.** Verfahren nach Anspruch 1 oder Anspruch 2 **dadurch gekennzeichnet, dass** nach dem Schritt e) ein Schneidprozess mit dem Schneidwerkzeug (21) ausgehend von dem zumindest einen bestimmten Anschnittpunkt (29) und/oder endend an dem zumindest einen bestimmten Freischnittpunkt (129) des zumindest einen herauszutrennenden Werkstückteils (18) ausgeführt wird, vorteilhaft gefolgt von einer Positionierungsbewegung des Schneidkopfs (20), ausgehend von dem bestimmten Freischnittpunkt (129).

**4.** Verfahren nach einem der Ansprüche 1 bis 3, **dadurch gekennzeichnet, dass** an zumindest einem Schneidkonturpunkt (19) der Schneidkontur (17) des zumindest einen herauszutrennenden Werkstückteils (18) und/oder zumindest an einem zum Schneidkonturpunkt (19) benachbarten Schneidkonturpunkt der Schneidkontur (17) eine Bearbeitungskraft ($F_B$) ermittelt wird, welche vom Schneidwerkzeug (21) auf das zumindest eine herauszutrennende Werkstückteil (18) ausgeübt wird, wobei die Bearbeitungskraft ($F_B$) vorteilhaft in Abhängigkeit von zumindest einem Schneidparameter des Schneidwerkzeugs (21) ermittelt wird, wobei der zumindest eine Schneidparameter des Schneidwerkzeugs (21) weiter vorteilhaft zumindest ein Schneidwerkzeugparameter, wie Schneidgasdruck, Düsenabstand, Düsendurchmesser, Düsenform ist, und/oder wobei der zumindest eine Schneidparameter zumindest ein Positionierungsparameter, wie Positionierungsgeschwindigkeit, Positionierungsbeschleunigung, Positionierungsrichtung ist, welcher nach dem Freischneiden des zumindest einen herauszutrennenden Werkstückteils (18) der Positionierungsbewegung des Schneidwerkzeugs (21) zugrunde liegt.

5. Verfahren nach einem der Ansprüche 1 bis 4, **dadurch gekennzeichnet, dass** nach dem Schritt c) das Ermitteln zumindest eines Werkstückteilparameters des zumindest einen herauszutrennenden Werkstückteils (18) erfolgt, vorteilhaft der Schwerpunkt (Sp) oder zumindest eine Schwerelinie ($S_L$) des zumindest einen herauszutrennenden Werkstückteils (18), und/oder das Ermitteln zumindest eines Polygonparameters eines Auflagepolygons (37) innerhalb des zumindest einen herauszutrennenden Werkstückteils (18), vorteilhaft eine Auflagelinie (38) des Auflagepolygons (37) erfolgt, und anschliessend

   das Bestimmen einer zulässigen Kraft (Fz) an zumindest einem Schneidkonturpunkt (19) der Schneidkontur (17) des zumindest einen herauszutrennenden Werkstückteils (18), vorteilhaft an mehreren Schneidkonturpunkten (19) der Schneidkontur (17) des zumindest einen herauszutrennenden Werkstückteils (18) erfolgt, wobei die zulässige Kraft die Kraft ist, bei deren Wirkung auf den jeweiligen Schneidkonturpunkt der Schneidkontur das herauszutrennende Werkstückteil im Moment des Freischneidens verkippt,
   mithilfe des zumindest einen Werkstückteilparameters und/oder des zumindest einen Polygonparameters und der ermittelten Position des zumindest einen Auflagepunkts (32) der Werkstückauflage (30) unterhalb des Werkstücks (16) oder unterhalb des herauszutrennenden Werkstückteils (18), oder
   mithilfe des zumindest einen Werkstückteilparameters und/oder des zumindest einen Polygonparameters und zumindest einem Abstand ($h_k$, $h_s$) der ermittelten Position des zumindest einen Auflagepunkts (32) der Werkstückauflage (30) unterhalb des Werkstücks (16) oder unterhalb des zumindest einen herauszutrennenden Werkstückteils (18), zu dem zumindest einen Schneidkonturpunkt (19) der Schneidkontur (17) des zumindest einen herauszutrennenden Werkstückteils (18), erfolgt.

6. Verfahren nach Anspruch 5, **dadurch gekennzeichnet, dass** im Schritt d) ein Kräftevergleich der zulässigen Kraft (Fz) mit zumindest einem zuvor bestimmten Kippkraftschrankenwert an zumindest dem einen Schneidkonturpunkt (19) der Schneidkontur (17) des zumindest einen herauszutrennenden Werkstückteils (18) erfolgt, wobei vorteilhaft der Kräftevergleich abhängig von der zuvor bestimmten Bearbeitungskraft ($F_B$) an zumindest einem der Schneidkonturpunkte (19) der Schneidkontur (17) des zumindest einen herauszutrennenden Werkstückteils (18) erfolgt, wobei weiter vorteilhaft die zuvor bestimmte Bearbeitungskraft ($F_B$) mit einem Sicherheitsfaktor multipliziert wird.

7. Verfahren nach Anspruch 6, **dadurch gekennzeichnet, dass** im Schritt d) auf Basis des Kräftevergleichs der zumindest eine Risikobereich (28) bestimmt wird.

8. Verfahren nach Anspruch 6 oder 7, **dadurch gekennzeichnet, dass** im Kräftevergleich zumindest ein risikoarmer Bereich (75) von Schneidkonturpunkten (19) der Schneidkontur (17) bestimmt wird, in dem die zulässige Kraft ($F_z$) zumindest einen minimalen Kippkraftschrankenwert überschreitet, und/oder dass im Kräftevergleich zumindest ein risikofreier Bereich (80) von Schneidkonturpunkten (19) der Schneidkontur (17) bestimmt wird, in dem die zulässige Kraft ($F_z$) zumindest einen maximalen Kippkraftschrankenwert überschreitet.

9. Verfahren nach Anspruch 7 oder 8, **dadurch gekennzeichnet, dass** der Kräftevergleich mit einem minimalen und/oder maximalen Kippkraftschrankenwert erfolgt, wobei dieser vorteilhaft von einer minimalen und oder maximalen Bearbeitungskraft ($F_B$) abgeleitet wird.

10. Verfahren nach einem der Ansprüche 5 bis 9, **dadurch gekennzeichnet, dass** nach dem Schritt b) ein Ermitteln der Lage des zumindest einen herauszutrennenden Werkstückteilparameters relativ zur Lage des zumindest einen Polygonparameters des Auflagepolygons (37) erfolgt und/oder die Parität der zulässigen Kraft (Fz) bestimmt wird und/oder vorteilhaft geprüft wird, ob der in Schritt d) ermittelte zumindest eine Risikobereich (28) alle Schneidkonturpunkte (19) der Schneidkontur (17) des zumindest einen herauszutrennenden Werkstückteils (18) umfasst.

11. Verfahren nach einem der Ansprüche 1 bis 10, **dadurch gekennzeichnet, dass** zumindest ein Mikrosteg (43) in der Schneidkontur (17) des zumindest einen herauszutrennenden Werkstückteils (18) belassen wird und/oder zumindest ein weiteres herauszutrennendes Werkstückteil vom Schneidwerkzeug zerkleinert wird.

**12.** Verfahren nach einem der Ansprüche 1 bis 11, **dadurch gekennzeichnet, dass** das Ermitteln der relativen Lage und/oder Ausrichtung des Werkstücks (16) und/oder des zumindest einen herauszutrennenden Werkstückteils (18) in Bezug auf die Werkstückauflage (30) (Schritt b)), und/oder das Ermitteln zumindest der relativen Position des zumindest einen Auflagepunkts (32) der Werkstückauflage (30), unterhalb des zumindest einen herauszutrennenden Werkstückteils (18) (Schritt c)), mit zumindest einer Erkennungseinrichtung (27) erfolgt, wobei die zumindest eine Erkennungseinrichtung (27) eine Sensorik der Strahlschneidvorrichtung (15) beinhaltet, die vorteilhaft am Schneidkopf (20) der Strahlschneidvorrichtung (15) lokalisiert ist.

**13.** Verfahren nach Anspruch 12, **dadurch gekennzeichnet, dass** die Sensorik aus einer Gruppe von optischen Detektoren, berührungslosen Abstandsmesseinrichtungen und einer Kamera besteht, wodurch vorteilhaft zumindest eine Kante des Werkstücks (16) und/oder eine Kante des zumindest einen herauszutrennenden Werkstückteils (18) detektiert wird.

**14.** Verfahren nach Anspruch 1 bis 11, **dadurch gekennzeichnet, dass** das Ermitteln der relativen Lage und/oder Ausrichtung des Werkstücks (16) in Bezug auf die Werkstückauflage (30) (Schritt b)), durch zumindest einen mechanischen Anschlag der Strahlschneidvorrichtung (15) für das Werkstück (16) erfolgt.

**15.** Verfahren nach einem der Ansprüche 1 bis 14, **dadurch gekennzeichnet, dass** nach dem Ermitteln der relativen Lage und/oder Ausrichtung des Werkstücks (16) auf einer Werkstückauflage (30) (gemäss Schritt b)) und nach dem Ermitteln des zumindest einen Risikobereichs (28) (gemäss Schritt d)), eine Neupositionierung des zumindest einen herauszutrennenden Werkstückteils (18) oder des Werkstücks (16), vorteilhaft abhängig von einem zuvor erstellten oder abgeänderten Schneidplan (48) am Werkstück (16), erfolgt, und/oder vorteilhaft zumindest die Auflagepunkte (32), welche unterhalb des Werkstücks (16) oder des zumindest einen herauszutrennenden Werkstückteils (18) liegen, neu positioniert werden.

**16.** Verfahren nach einem der Ansprüche 1 bis 15, **dadurch gekennzeichnet, dass** das Ermitteln von zumindest einem Risikobereich (28) an der Schneidkontur (17) des zumindest einen herauszutrennenden Werkstückteils (18) (Schritt d)) und/oder das Bestimmen des zumindest einen Anschnittpunkts (29) und/oder eines Freischnittpunkts (129) für das Schneidwerkzeug (21) (Schritt e)) von der Geometrie der Schneidkontur (17) insbesondere von der Schneidkonturkrümmung des zumindest einen herauszutrennenden Werkstückteils (18) abhängt, wobei vorteilhaft der Anschnittpunkt (29) an einem konvexen Schneidkonturabschnitt des zumindest einen herauszutrennenden Werkstückteils (18) ausgewählt wird, und/oder vorteilhaft die Auswahl des Anschnittpunkts (29) für das Schneidwerkzeug (21) an der Schneidkontur (17) des zumindest einen herauszutrennenden Werkstückteils (18) mithilfe zumindest einer Selektionsgeraden (40, 41) bestimmt wird, welche zu der Schneidkonturpunktnormalen (42) um einen Selektionswinkel ($\beta$) geneigt ist.

**17.** Verfahren nach einem der Ansprüche 1 bis 16, **dadurch gekennzeichnet, dass** die bestimmten Anschnittpunkte (29) oder bestimmten Freischnittpunkte (129) der herauszutrennenden Werkstückteile (18) am Werkstück (16) zum Optimieren der Schneidreihenfolge und/oder des Positionierungswegs des Schneidwerkzeugs (21) am Werkstück (16) gereiht werden und das Ausführen des Schneidprozesses an einem der bestimmten Anschnittpunkte (29) oder Freischnittpunkte (129) erfolgt.

**18.** Verfahren nach einem der Ansprüche 1 bis 17,

**dadurch gekennzeichnet, dass** vor dem Schritt b) die Konturgrösse des herauszutrennenden Werkstückteils (18) bestimmt wird und vorteilhaft einer zuvor definierten Konturgrössenklasse zugeordnet wird; und/oder
**gekennzeichnet durch das** Bestimmen einer Abfolge von wenigstens zwei Anschnittpunkten (29) und/oder Freischnittpunkten (129) für das Schneidwerkzeug (21) an den Schneidkonturen (17) von zumindest zwei in der Abfolge nacheinander herauszutrennenden Werkstückteilen (18), unter Berücksichtigung von mehr als einem erkannten Risikobereich (28) an den Schneidkonturen (17) der zumindest zwei nacheinander herauszutrennenden Werkstückteile (18).

**19.** Verfahren nach Anspruch 1,
**dadurch gekennzeichnet, dass** die zwei nacheinander herauszutrennenden Werkstückteile (18) benachbart zueinander, vorzugsweise nebeneinander angeordnet sind.

20. Verfahren nach Anspruch 19, **dadurch gekennzeichnet, dass** die Werkstückteile (18) derart ausgewählt werden, dass der dazwischenliegende Positionierungsweg frei von geschnittenen Werkstückteilen ist.

21. Verfahren nach einem der Ansprüche 1 bis 18, **dadurch gekennzeichnet, dass** die Verfahrensschritte und Auflageelemente in einem virtuellen Raum abgebildet sind, wobei die Werkstückauflage (30) virtuell ist und der zumindest eine Schneidplan (48) zumindest eine Information zur Lage und/oder Ausrichtung der virtuellen Werkstückauflage (130) relativ zum virtuellen Werkstück (216) aufweist.

22. Verfahren nach Anspruch 21, **dadurch gekennzeichnet, dass** eine Schar von Schneidplänen (48, 49) mit zumindest einem weiteren Schneidplan (49) festgelegt wird, wobei die Lage und/oder Ausrichtung der virtuellen Werkstückauflage (130) in jedem Schneidplan (48, 49) der Schar verschieden und in x- und y- Richtung versetzt ist.

23. Verfahren nach Anspruch 22, **dadurch gekennzeichnet, dass** jener Schneidplan (48, 49) aus der Schar von Schneidplänen (48; 49) ausgewählt wird, welcher die grösste Übereinstimmung der zumindest einen Information zur Lage und/oder Ausrichtung des zumindest einen herauszutrennenden Werkstückteils (18) relativ zur virtuellen Werkstückauflage (130) mit einer tatsächlich ermittelten Lage und/oder Ausrichtung der Werkstückauflage (30) der Strahlschneidvorrichtung (15) relativ zum Werkstück (16) aufweist.

24. Verfahren nach einem der Ansprüche 21 bis 23, **gekennzeichnet durch das** Bestimmen einer Abfolge von wenigstens zwei Anschnittpunkten (29) und/oder Freischnittpunkten (129) für das Schneidwerkzeug (21) an den Schneidkonturen (17) von zumindest zwei in der Abfolge nacheinander herauszutrennenden Werkstückteilen (18), unter Berücksichtigung von mehr als einem erkannten Risikobereich (28) an den Schneidkonturen (17) der zumindest zwei nacheinander herauszutrennenden Werkstückteile (18).

25. Verfahren nach Anspruch 24, **dadurch gekennzeichnet, dass** die zwei nacheinander herauszutrennenden Werkstückteile (18) benachbart zueinander, vorzugsweise nebeneinander angeordnet sind.

26. Verfahren nach Anspruch 25, **dadurch gekennzeichnet, dass** die Werkstückteile (18) derart ausgewählt werden, dass der dazwischenliegende Positionierungsweg frei von geschnittenen Werkstückteilen ist.

27. Computerimplementiertes Verfahren zum automatischen Bestimmen und Erzeugen von Geometrieelementen und Bewegungsbefehlen zum Steuern eines Schneidwerkzeugs (21) einer Strahlschneidvorrichtung (15), welches das Verfahren nach einem der Ansprüche 21 bis 26 ausführt, wobei nach dem Schritt e) das automatische Erzeugen und Speichern von zumindest einem Datensatz mit Geometrieelementen und zumindest einem Bewegungsbefehl, vorteilhaft mehreren Datensätzen mit Geometrieelementen und mehreren Bewegungsbefehlen, welche zumindest die zumindest eine Anschnittkontur (39) angeben und zumindest die Bewegung des Schneidwerkzeugs (21) zum zumindest einen Anschnittpunkt (29) oder zum zumindest einen Freischnittpunkt (129) angeben, erfolgt.

28. Computerimplementiertes Verfahren nach Anspruch 27, **dadurch gekennzeichnet, dass** die gespeicherten Datensätze mit Geometrieelementen und die gespeicherten Bewegungsbefehle, welche zumindest die zumindest eine Anschnittkontur (39) und zumindest die Bewegung des Schneidwerkzeuges (21) zum zumindest einen Anschnittpunkt (29) und/oder zum zumindest einen Freischnittpunkt (129) angeben, an die Steuerungseinrichtung (60) der Strahlschneidvorrichtung (15) übermittelt werden.

29. Strahlschneidvorrichtung (15) zum Ausführen der Verfahren nach einem der Ansprüche 1 bis 26, mit einem Schneidwerkzeug (21), einer Werkstückauflage (30), einer Steuereinrichtung (60) mit einer Speichereinrichtung (50; 250), sowie einer Erkennungseinrichtung (27), wobei die zumindest eine Erkennungseinrichtung (27) eine Sensorik der Strahlschneidvorrichtung (15) beinhaltet, die vorteilhaft an einem Schneidkopf (20) der Strahlschneidvorrichtung (15) lokalisiert ist, und/oder einem mechanischen Anschlag für das Werkstück, zum Ermitteln der relativen Lage und/oder Ausrichtung des Werkstücks (16) in Bezug auf die Werkstückauflage (30), und einem Computer zum Ausführen des computerimplementierten Verfahrens nach einem der Ansprüche 27 und 28, wobei der Computer ein Softwarepaket (212) mit mehreren Softwareapplikationen und einer Automatisierungssoftware (216) beinhaltet, die im Computerprozessor ausgeführt werden, und die virtuellen Schritte des Verfahrens in der Automatisierungssoftware als das computerimplementierte Verfahren implementiert sind.

**Claims**

1. A method for controlling a jet/beam cutting device (15) having a cutting tool (21) by means of which at least one workpiece part (18) can be cut out from a workpiece (16) along a cutting contour (17), wherein the jet/beam cutting device (15) has a workpiece support (30; 130) with a plurality of support points (32) for receiving a workpiece (16) and the method comprises the following steps:

   a) defining at least one cutting plan (48) for the workpiece (16) with at least one cutting contour (17) for at least one workpiece part (18) to be cut out of the workpiece (16);
   b) determining the relative position and/or orientation of the workpiece (16) and/or the cutting plan (48) and/or the at least one workpiece part (18) to be cut out in relation to the workpiece support (30; 130);
   c) determining at least the relative position of the at least one support point (32) of the workpiece support (30; 130) below the at least one workpiece part (18) to be cut out;
   d) determining at least one risk area (28) on the cutting contour (17) of the at least one workpiece part (18) to be cut out, in which, when the at least one workpiece part (18) to be cut out is cut free, tilting of the at least one workpiece part (18) to be cut out is possible at this risk area (28);
   e) determining at least one starting-cut point (29) and/or one cut-away point (129) for the cutting tool (21) on the cutting contour (17) of the at least one workpiece part (18) to be cut out, taking into account the at least one detected risk area (28) on the cutting contour (17) of the at least one workpiece part (18) to be cut out, wherein the starting-cut point and/or the cut-away point on the at least one workpiece part to be cut out is selected in such a way that, during the free cutting and/or cutting out of the at least one workpiece part to be cut out, tilting of the at least one workpiece part to be cut out is prevented.

2. The method according to claim 1, **characterised in that,** at the latest in step e), the coordinates ($X_A$, $x_A$) of the at least one specific starting-cut point (29) and/or the coordinates ($x_F$, $x_F$) of the at least one specific cut-away point (129) are stored in a storage device (50, 250).

3. The method according to claim 1 or claim 2, **characterised in that,** after step e), a cutting process is carried out with the cutting tool (21) starting from the at least one specific starting-cut point (29) and/or ending at the at least one specific cut-away point (129) of the at least one workpiece part (18) to be cut out, advantageously followed by a positioning movement of the cutting head (20) starting from the specific cut-away point (129).

4. The method according to any one of claims 1 to 3, **characterised in that** a machining force (FB) is determined at least at one cutting contour point (19) of the cutting contour (17) of the at least one workpiece part (18) to be cut out and/or at least at one cutting contour point of the cutting contour (17) adjacent to the cutting contour point (19), which machining force is exerted by the cutting tool (21) onto the at least one workpiece part (18) to be cut out, the machining force (FB) being advantageously determined as a function of at least one cutting parameter of the cutting tool (21), the at least one cutting parameter of the cutting tool (21) being further advantageously at least one cutting tool parameter, such as the cutting gas pressure, nozzle spacing, nozzle diameter, nozzle shape, and/or the at least one cutting parameter being at least one positioning parameter, such as the positioning speed, positioning acceleration, positioning direction, which is the basis for the positioning movement of the cutting tool (21) after the at least one workpiece part (18) to be cut out is cut free.

5. The method according to any one of claims 1 to 4, **characterised in that** after step c) the at least one workpiece part parameter of the at least one workpiece part (18) to be cut out, advantageously the centre of gravity ($S_P$) or at least one gravity line ($S_L$) of the at least one workpiece part (18) to be cut out, is determined and/or the at least one polygon parameter of a support polygon (37) within the at least one workpiece part (18) to be cut out, advantageously a support line (38) of the support polygon (37), is determined and then

   a permissible force (Fz) at least at one cutting contour point (19) of the cutting contour (17) of the at least one workpiece part (18) to be cut out, advantageously at a plurality of cutting contour points (19) of the cutting contour (17) of the at least one workpiece part (18) to be cut out, is determined, the permissible force being the force at which action on the particular cutting contour point of the cutting contour the workpiece part to be cut out tilts at the moment of cutting free,
   the permissible force being determined with the aid of the at least one workpiece part parameter and/or the at least one polygon parameter and the determined position of the at least one support point (32) of the workpiece support (30) below the workpiece (16) or below the workpiece part (18) to be cut out, or
   with the aid of the at least one workpiece part parameter and/or the at least one polygon parameter and at least one distance (hk, hs) of the determined position of the at least one support point (32) of the workpiece support (30) below the workpiece (16) or below the at least one workpiece part (18) to be cut out, from the at least one cutting contour point (19) of the cutting contour (17) of the at least one workpiece part (18) to be cut out.

6. The method according to claim 5, **characterised in that** in step d) a force comparison of the permissible force (Fz) with at least one previously determined tilting force restrictive value is carried out at least at the one cutting contour point (19) of the cutting contour (17) of the at least one workpiece part (18) to be cut out, the force comparison advantageously being carried out depending on the previously determined machining force (FB) at least at one of the cutting contour points (19) of the cutting contour (17) of the at least one workpiece part (18) to be cut out, the previously determined machining force (FB) further advantageously being multiplied with a safety factor.

7. The method according to claim 6, **characterised in that** in step d) the at least one risk area (28) is determined based on the force comparison.

8. The method according to claim 6 or 7, **characterised in that** in the force comparison at least one low-risk region (75) of the cutting contour points (19) of the cutting contour (17) is determined, in which the permissible force (Fz) exceeds at least one minimum tilting force restrictive value, and/or **in that** in the force comparison at least one risk-free region (80) of the cutting contour points (19) of the cutting contour (17) is determined, in which the permissible force (Fz) exceeds at least one maximum tilting force restrictive value.

9. The method according to claim 7 or 8, **characterised in that** the force comparison is carried out with a minimum and/or maximum tilting force restrictive value, this being advantageously derived from a minimum and or maximum machining force (FB).

10. The method according to any one of claims 5 to 9, **characterised in that** after step b) a the position of the at least one workpiece part parameter to be cut out relative to the position of the at least one polygon parameter of the support polygon (37) is determined and/or the parity of the permissible force (Fz) is determined and/or advantageously it is checked whether the at least one risk area (28) determined in step d) comprises all cutting contour points (19) of the cutting contour (17) of the at least one workpiece part (18) to be cut out.

11. The method according to any one of claims 1 to 10, **characterised in that** at least one micro-bridge (43) is left in the cutting contour (17) of the at least one workpiece part (18) to be cut out and/or at least one further workpiece part to be cut out is comminuted by the cutting tool.

12. The method according to any one of claims 1 to 11, **characterised in that** the relative position and/or orientation of the workpiece (16) and/or of the at least one workpiece part (18) to be cut out in relation to the workpiece support (30) (step b)), and/or at least the relative position of the at least one support point (32) of the workpiece support (30) below the at least one workpiece part (18) to be cut out (step c)) are/is determined with at least one detection device (27), the at least one detection device (27) including a sensor system of the jet/beam cutting device (15), which is advantageously located on the cutting head (20) of the jet/beam cutting device (15).

13. The method according to claim 12, **characterised in that** the sensor system consists of a group of optical detectors, non-contact distance measuring devices and a camera, whereby advantageously at least one edge of the workpiece (16) and/or one edge of the at least one workpiece part (18) to be cut out is detected.

14. The method according to claim 1 to 11, **characterised in that** the relative position and/or orientation of the workpiece (16) in relation to the workpiece support (30) (step b)) is determined by at least one mechanical stop of the jet/beam cutting device (15) for the workpiece (16).

15. The method according to any one of claims 1 to 14, **characterised in that,** after determining the relative position and/or orientation of the workpiece (16) on a workpiece support (30) (according to step b)) and after determining the at least one risk area (28) (according to step d)), a repositioning of the at least one workpiece part (18) to be cut out or the workpiece (16), advantageously as a function of a previously prepared or modified cutting plan (48) on the workpiece (16), is carried out and/or advantageously at least the support points (32) which lie below the workpiece (16) or the at least one workpiece part (18) to be cut out are repositioned.

16. The method according to any one of claims 1 to 15, **characterised in that** the determination of at least one risk area (28) on the cutting contour (17) of the at least one workpiece part (18) to be cut out (step d)) and/or the determination of the at least one starting-cut point (29) and/or of a cut-away point (129) for the cutting tool (21) (step e)) depends on the geometry of the cutting contour (17), in particular on the cutting contour curvature of the at least one workpiece part (18) to be cut out, the starting-cut point (29) being selected advantageously at a convex cutting contour portion of the at least one workpiece part (18) to be cut out, and/or advantageously the selection of the starting-cut point (29) for the cutting tool (21) on the cutting contour (17) of the at least one workpiece part (18) to be cut out being determined with the aid of at least one selection straight (40, 41), which is inclined with respect to the cutting contour point normal (42) by a selection angle ($\beta$).

17. The method according to any one of claims 1 to 16, **characterised in that** the determined starting-cut points (29) or determined cut-away points (129) of the workpiece parts (18) to be cut on the workpiece (16) are lined up for optimizing the cutting sequence and/or the positioning path of the cutting tool (21) on the workpiece (16), and the cutting process is carried out at one of the determined starting-cut points (29) or cut-away points (129).

18. The method according to any one of claims 1 to 17,

**characterised in that** before step b) the contour size of the workpiece part (18) to be cut out is determined and advantageously assigned to a previously defined contour size class; and/or
**characterised in that** a sequence of at least two starting-cut points (29) and/or cut-away points (129) for the cutting tool (21) on the cutting contours (17) of at least two workpiece parts (18) to be successively cut out in the sequence is determined, taking into account more than one detected risk area (28) on the cutting contours (17) of the at least two workpiece parts (18) to be successively cut out.

19. The method according to claim 1,
**characterised in that** the two workpiece parts (18) to be successively cut out are arranged adjacent to one another, preferably side by side.

20. The method according to claim 19, **characterised in that** the workpiece parts (18) are selected such that the intermediary positioning path is free of cut workpiece parts.

21. The method according to any one of claims 1 to 18, **characterised in that** the method steps and support elements are mapped in a virtual space, the workpiece support (30) being virtual and the at least one cutting plan (48) having at least one item of information regarding the position and/or orientation of the virtual workpiece support (130) relative to the virtual workpiece (216).

22. The method according to claim 21, **characterised in that** a set of cutting plans (48, 49) is defined with at least one further cutting plan (49), the position and/or orientation of the virtual workpiece support (130) in each cutting plan (48, 49) of the set being different and offset in the x- and y-directions.

23. The method according to claim 22, **characterised in that** the cutting plan (48, 49) that exhibits the greatest correspondence of the at least one item of information regarding the position and/or orientation of the at least one workpiece part (18) to be cut out relative to the virtual workpiece support (130) with an actually determined position and/or orientation of the workpiece support (30) of the jet/beam cutting device (15) relative to the workpiece (16) is selected from the set of cutting plans (48; 49).

24. A method according to any one of claims 21 to 23, **characterised in that** a sequence of at least two starting-cut points (29) and/or cut-away points (129) for the cutting tool (21) on the cutting contours (17) of at least two workpiece parts (18) to be successively cut out in the sequence is determined, taking into account more than one detected risk area (28) on the cutting contours (17) of the at least two workpiece parts (18) to be successively cut out.

25. The method according to claim 24, **characterised in that** the two workpiece parts (18) to be successively cut out are arranged adjacent to one another, preferably side by side.

26. The method according to claim 25, **characterised in that** the workpiece parts (18) are selected such that the intermediary positioning path is free of cut workpiece parts.

27. A computer-implemented method for the automatic determination and generation of geometry elements and movement commands for controlling a cutting tool (21) of a jet/beam cutting device (15), which carries out the method according to any one of claims 21 to 26, wherein after step e) at least one data set with geometry elements and at least one movement command, advantageously a plurality of data sets with geometry elements and a plurality of movement commands specifying at least the at least one cutting contour (39) and specifying at least the movement of the cutting tool (21) relative to the at least one starting-cut point (29) or relative to the at least one cut-away point (129) is automatically generated and stored.

**28.** The computer-implemented method according to claim 27, **characterised in that** the stored data sets with geometry elements and the stored movement commands specifying at least the at least one cutting contour (39) and at least the movement of the cutting tool (21) relative to the at least one starting-cut point (29) and/or relative to the at least one cut-away point (129) are transmitted to the control device (60) of the jet/beam cutting device (15).

**29.** A jet/beam cutting device (15) for carrying out the methods according to any one of claims 1 to 26, comprising a cutting tool (21), a workpiece support (30), a control device (60) with a storage device (50; 250), and a detection device (27), wherein the at least one detection device (27) includes a sensor system of the jet/beam cutting device (15), which is advantageously located at a cutting head (20) of the jet/beam cutting device (15), and/or a mechanical stop for the workpiece, for determining the relative position and/or orientation of the workpiece (16) in relation to the workpiece support (30) and a computer for executing the computer-implemented method according to any one of claims 27 and 28, wherein the computer includes a software package (212) with a plurality of software applications and an automation software (216), which are executed in the computer processor, and the virtual steps of the method are implemented in the automation software as the computer-implemented method.

## Revendications

**1.** Procédé de commande d'un dispositif de découpe au jet (15) comprenant un outil de découpe (21) au moyen duquel au moins une partie de pièce (18) peut être séparée d'une pièce (16) le long d'un contour de découpe (17), le dispositif de découpe au jet (15) ayant un support de pièce (30 ; 130) ayant une pluralité de points d'appui (32) pour recevoir une pièce (16) et le procédé comprenant les étapes suivantes :

a) spécifier au moins un plan de découpe (48) pour la pièce (16) avec au moins un contour de découpe (17) pour au moins une partie de pièce (18) à séparer de la pièce (16) ;
b) déterminer la position et/ou l'orientation relative de la pièce (16) et/ou du plan de découpe (48) et/ou de l'au moins une partie de pièce (18) à séparer par rapport au support de pièce (30 ; 130) ;
c) déterminer au moins la position relative de l'au moins un point d'appui (32) du support de pièce (30 ; 130), en dessous de l'au moins une partie de pièce (18) à séparer ;
d) déterminer au moins une zone à risque (28) au niveau du contour de découpe (17) de l'au moins une partie de pièce (18) à séparer, dans laquelle, lors de la découpe non guidée de l'au moins une partie de pièce (18) à séparer dans cette zone à risque (28), un basculement de l'au moins une partie de pièce (18) à séparer est possible ;
e) déterminer au moins un point d'amorçage de coupe (29) et/ou un point de découpe non guidée (129) pour l'outil de découpe (21) au niveau du contour de découpe (17) de l'au moins une partie de pièce (18) à séparer, en tenant compte de l'au moins une zone à risque (28) identifiée au niveau du contour de découpe (17) de l'au moins une partie de pièce (18) à découper, le point d'amorçage de coupe ou le point de découpe non guidée sur l'au moins une partie de pièce à séparer étant sélectionné de telle sorte que lors de la découpe non guidée ou de la séparation de l'au moins une partie de pièce à séparer, un basculement de l'au moins une partie de pièce à séparer est évité.

**2.** Procédé selon la revendication 1, **caractérisé en ce qu'**au plus tard à l'étape e) les coordonnées (xA, xA) de l'au moins un point d'amorçage de coupe (29) déterminé et/ou les coordonnées (xF, xF) de l'au moins un point de découpe non guidée (129) déterminé sont stockées dans un dispositif de stockage (50, 250).

**3.** Procédé selon la revendication 1 ou la revendication 2, **caractérisé en ce qu'**après l'étape e) un processus de découpe avec l'outil de découpe (21) partant de l'au moins un point d'amorçage de coupe (29) déterminé et/ou se terminant à l'au moins un point de découpe non guidée (129) déterminé de l'au moins une partie de pièce (18) à séparer est exécuté, suivi avantageusement d'un déplacement de positionnement de la tête de découpe (20), à partir du point de découpe non guidée (129) déterminé.

**4.** Procédé selon l'une quelconque des revendications 1 à 3, **caractérisé en ce qu'**en au moins un point de contour de découpe (19) du contour de découpe (17) de l'au moins une partie de pièce (18) à séparer et/ou en au moins un point de contour de découpe adjacent au point de contour de découpe (19) du contour de découpe (17), une force d'usinage (FB) est déterminée, qui est exercée par l'outil de découpe (21) sur l'au moins une partie de pièce (18) à séparer, la force d'usinage (FB) étant avantageusement déterminée en fonction d'au moins un paramètre de découpe de l'outil de découpe (21), l'au moins un paramètre de découpe de l'outil de découpe (21) étant en outre avantageusement au moins un paramètre de l'outil de découpe, tel que la pression du gaz de découpe, la distance de la buse, le diamètre de la buse, la forme de la buse et/ou l'au moins un paramètre de découpe étant au moins un paramètre de positionnement, tel que la vitesse de positionnement, l'accélération de positionnement, la direction de positionnement, qui après la découpe non guidée de l'au moins une partie de pièce (18) à séparer, est basé sur le déplacement de positionnement de l'outil de découpe (21).

5. Procédé selon l'une quelconque des revendications 1 à 4, **caractérisé en ce qu'**après l'étape c) on détermine au moins un paramètre de partie de pièce de l'au moins une partie de pièce (18) à séparer, avantageusement le centre de gravité ($S_P$) ou au moins une ligne de gravité ($S_L$) de l'au moins une partie de pièce (18) à séparer et/ou on détermine au moins un paramètre de polygone d'un polygone d'appui (37) à l'intérieur de l'au moins une partie de pièce (18) à séparer, avantageusement une ligne d'appui (38) du polygone d'appui (37), et ensuite

on détermine une force admissible (Fz) en au moins un point de contour de découpe (19) du contour de découpe (17) de l'au moins une partie de pièce (18) à séparer, avantageusement en plusieurs points de contour de découpe (19) du contour de découpe (17) de l'au moins une partie de pièce (18) à séparer, la force admissible étant la force dont l'effet sur le point de contour de découpe respectif du contour de découpe fait basculer la partie de pièce à séparer au moment de la découpe non guidée,
au moyen de l'au moins un paramètre de partie de pièce et/ou l'au moins un paramètre de polygone et de la position déterminée de l'au moins un point d'appui (32) du support de pièce (30) en dessous de la pièce (16) ou en dessous de la partie de pièce (18) à séparer ou
au moyen de l'au moins un paramètre de partie de pièce et/ou l'au moins un paramètre de polygone et au moins une distance (hk, hs) de la position déterminée de l'au moins un point d'appui (32) du support de pièce (30) en dessous de la pièce (16) ou en dessous de l'au moins une partie de pièce (18) à séparer jusqu'à l'au moins un point de contour de découpe (19) du contour de découpe (17) de l'au moins une partie de pièce (18) à séparer.

6. Procédé selon la revendication 5, **caractérisé en ce qu'**à l'étape d), une comparaison de forces de la force admissible ($F_Z$) avec au moins une valeur barrière de force de basculement préalablement déterminée est effectuée en l'au moins un point de contour de découpe (19) du contour de découpe (17) de l'au moins une partie de pièce (18) à séparer, la comparaison de forces étant avantageusement effectuée en fonction de la force d'usinage (FB) préalablement déterminée en au moins un des points de contour de découpe (19) du contour de découpe (17) de l'au moins une partie de pièce (18) à séparer, la force d'usinage (FB) préalablement déterminée étant également avantageusement multipliée par un facteur de sécurité.

7. Procédé selon la revendication 6, **caractérisé en ce qu'**à l'étape d) l'au moins une zone à risque (28) est déterminée sur la base de la comparaison de forces.

8. Procédé selon la revendication 6 ou 7, **caractérisé en ce qu'**au moins une zone à faible risque (75) de points de contour de découpe (19) du contour de découpe (17) est déterminée dans la comparaison de forces, dans laquelle la force admissible (Fz) dépasse au moins une valeur limite de force de basculement minimale et/ou **en ce qu'**au moins une zone sans risque (80) de points de contour de découpe (19) du contour de découpe (17) est déterminée dans la comparaison de forces, dans laquelle la force admissible (Fz) dépasse au moins une valeur limite de force de basculement maximale.

9. Procédé selon la revendication 7 ou 8, **caractérisé en ce que** la comparaison de forces est effectuée avec une valeur barrière de force de basculement minimale et/ou maximale de force de basculement, celle-ci étant avantageusement dérivée d'une force d'usinage minimale et/ou maximale ($F_B$).

10. Procédé selon l'une quelconque des revendications 5 à 9, **caractérisé en ce qu'**après l'étape b) la position de l'au moins un paramètre de partie de pièce à séparer est déterminée par rapport à la position de l'au moins un paramètre de polygone du polygone d'appui (37) et/ou la parité de la force admissible (Fz) est déterminée et/ou il est avantageusement vérifié si l'au moins une zone à risque (28) déterminée à l'étape d) comprend tous les points de contour de découpe (19) du contour de découpe (17) de l'au moins une partie de pièce (18) à séparer.

11. Procédé selon l'une quelconque des revendications 1 à 10, **caractérisé en ce qu'**au moins un micro-élément de liaison (43) est laissé dans le contour de découpe (17) de l'au moins une partie de pièce (18) à séparer et/ou au moins une autre partie de pièce à séparer est broyée par l'outil de découpe.

12. Procédé selon l'une quelconque des revendications 1 à 11, **caractérisé en ce que** la détermination de la position et/ou de l'orientation relative de la pièce (16) et/ou de l'au moins une partie de pièce (18) à séparer par rapport au support de pièce (30) (étape b)) et/ou la détermination au moins de la position relative de l'au moins un point d'appui (32) du support de pièce (30), en dessous de l'au moins une partie de pièce (18) à séparer (étape c)), est effectuée avec au moins un dispositif de détection (27), l'au moins un dispositif de détection (27) contenant un système de capteur du dispositif de découpe au jet (15), qui est avantageusement situé sur la tête de découpe (20) du dispositif de découpe au jet (15).

13. Procédé selon la revendication 12, **caractérisé en ce que** le système de capteur se compose d'un groupe de détecteurs optiques, de dispositifs de mesure de distance sans contact et d'une caméra, permettant de détecter avantageusement au moins un bord de la pièce (16) et/ou un bord de l'au moins une partie de pièce (18) à séparer.

14. Procédé selon la revendication 1 à 11, **caractérisé en ce que** la détermination de la position et/ou de l'orientation relative de la pièce (16) par rapport au support de pièce (30) (étape b)) est effectuée par au moins une butée mécanique du dispositif de découpe au jet (15) pour la pièce (16).

15. Procédé selon l'une quelconque des revendications 1 à 14, **caractérisé en ce qu'**après détermination de la position et/ou de l'orientation relative de la pièce (16) sur un support de pièce (30) (selon l'étape b)) et après détermination de l'au moins une zone à risque (28) (selon l'étape d)), l'au moins une partie de pièce (18) à séparer ou la pièce (16) est repositionnée, avantageusement en fonction d'un plan de découpe (48) préalablement créé ou modifié sur la pièce (16) et/ou avantageusement au moins les points d'appui (32), qui se trouvent sous la pièce (16) ou l'au moins une partie de pièce (18) à séparer, sont repositionnés.

16. Procédé selon l'une quelconque des revendications 1 à 15, **caractérisé en ce que** la détermination d'au moins une zone à risque (28) sur le contour de découpe (17) de l'au moins une partie de pièce (18) à séparer (étape d)) et/ou la détermination de l'au moins un point d'amorçage de coupe (29) et/ou d'un point de découpe non guidée (129) pour l'outil de découpe (21) (étape e)) dépend de la géométrie du contour de découpe (17), en particulier de la courbure du contour de découpe de l'au moins une partie de pièce (18) à séparer, le point d'amorçage de coupe (29) étant avantageusement sélectionné sur une section convexe du contour de découpe de l'au moins une partie de pièce (18) à séparer et/ou avantageusement la sélection du point d'amorçage de coupe (29) pour l'outil de découpe (21) sur le contour de découpe (17) de l'au moins une partie de pièce (18) à séparer est déterminé à l'aide d'au moins une droite de sélection (40, 41), laquelle est inclinée par rapport à la normale du point de contour de découpe (42) selon un angle de sélection ($\beta$).

17. Procédé selon l'une quelconque des revendications 1 à 16, **caractérisé en ce que** les points d'amorçage de coupe (29) déterminés ou les points de découpe non guidée (129) déterminés des parties de pièce (18) à séparer sur la pièce (16) sont alignés sur la pièce (16) pour optimiser la séquence de découpe et/ou la trajectoire de positionnement de l'outil de découpe (21) et la réalisation du processus de découpe est effectuée à l'un des points d'amorçage de coupe (29) ou des points de découpe non guidée (129) déterminés.

18. Procédé selon l'une quelconque des revendications 1 à 17,

   **caractérisé en ce qu'**avant l'étape b) la taille de contour de la partie de pièce (18) à séparer est déterminée et avantageusement affectée à une classe de taille de contour préalablement définie ; et/ou
   **caractérisé par la** détermination d'une séquence d'au moins deux points d'amorçage de coupe (29) et/ou points de découpe non guidée (129) pour l'outil de découpe (21) sur les contours de découpe (17) d'au moins deux parties de pièce (18) à séparer l'une après l'autre dans la séquence, en tenant compte de plus d'une zone à risque (28) reconnue sur les contours de découpe (17) des au moins deux parties de pièce (18) à séparer l'une après l'autre.

19. Procédé selon la revendication 1,
   **caractérisé en ce que** les deux parties de pièce (18) à séparer l'une après l'autre sont adjacentes l'une de l'autre, de préférence l'une à côté de l'autre.

20. Procédé selon la revendication 19, **caractérisé en ce que** les parties de pièce (18) sont sélectionnées de manière à ce que la trajectoire de positionnement entre elles soit exempte de parties de pièce découpées.

21. Procédé selon l'une quelconque des revendications 1 à 18, **caractérisé en ce que** les étapes de procédé et les éléments d'appui sont représentés dans un espace virtuel, le support de pièce (30) étant virtuel et l'au moins un plan de découpe (48) contenant au moins une information sur la position et/ou l'orientation du support de pièce (130) virtuel par rapport à la pièce virtuelle (216).

22. Procédé selon la revendication 21, **caractérisé en ce qu'**un groupe de plans de découpe (48, 49) est défini avec au moins un autre plan de découpe (49), la position et/ou l'orientation du support de pièce (130) virtuel dans chaque plan de découpe (48, 49) du groupe étant différentes et décalées dans les directions x et y.

23. Procédé selon la revendication 22, **caractérisé en ce qu'**un plan de découpe (48, 49), qui présente la plus grande correspondance de l'au moins une information sur la position et/ou l'orientation de l'au moins une partie de pièce (18) à séparer par rapport au support de pièce (130) virtuel avec une position et/ou une orientation réellement déterminées du support de pièce (30) du dispositif de découpe au jet (15) par rapport à la pièce (16), est choisi dans le groupe de plans de découpe (48 ; 49).

24. Procédé selon l'une quelconque des revendications 21 à 23, **caractérisé par la** détermination d'une séquence d'au moins deux points d'amorçage de coupe (29) et/ou points de découpe non guidée (129) pour l'outil de découpe (21) sur les contours de découpe (17) d'au moins deux parties de pièce (18) à séparer l'une après l'autre dans la séquence, en tenant compte de plus d'une zone de risque (28) reconnue sur les contours de découpe (17) des au moins deux parties de pièce (18) à séparer l'une après l'autre.

25. Procédé selon la revendication 24, **caractérisé en ce que** les deux parties de pièce (18) à séparer l'une après l'autre sont adjacentes l'une de l'autre, de préférence l'une à côté de l'autre.

26. Procédé selon la revendication 25, **caractérisé en ce que** les parties de pièce (18) sont sélectionnées de manière à ce que la trajectoire de positionnement entre elles soit exempte de parties de pièce découpées.

27. Procédé mis en œuvre par ordinateur pour déterminer et générer automatiquement des éléments de géométrie et des instructions de déplacement destinées à commander un outil de découpe (21) d'un dispositif de découpe au jet (15), qui exécute le procédé selon l'une quelconque des revendications 21 à 26, dans lequel après l'étape e) la génération et le stockage automatiques d'au moins un jeu de données avec des éléments de géométrie et au moins une instruction de déplacement, avantageusement plusieurs jeux de données avec des éléments de géométrie et plusieurs instructions de déplacement, qui spécifient au moins l'au moins un contour d'amorçage de coupe (39) et au moins le déplacement de l'outil de découpe (21) vers l'au moins un point d'amorçage de coupe (29) ou vers l'au moins un point de découpe non guidée (129), sont effectués.

28. Procédé mis en œuvre par ordinateur selon la revendication 27, **caractérisé en ce que** les jeux de données stockés avec des éléments de géométrie et les instructions de déplacement stockées, qui définissent au moins l'au moins un contour d'amorçage de coupe (39) et au moins le déplacement de l'outil de découpe (21) vers l'au moins un point d'amorçage de coupe (29) et/ou au moins un point de découpe non guidée (129), sont transmis au dispositif de commande (60) du dispositif de découpe au jet (15).

29. Dispositif de découpe au jet (15) pour la mise en œuvre du procédé selon l'une quelconque des revendications 1 à 26, comprenant un outil de découpe (21), un support de pièce (30), un dispositif de commande (60) avec un dispositif de stockage (50 ; 250) et un dispositif de détection (27), dans lequel l'au moins un dispositif de détection (27) contient un système de capteur du dispositif de découpe au jet (15), qui est avantageusement situé sur une tête de découpe (20) du dispositif de découpe au jet (15) et/ou une butée mécanique pour la pièce, pour déterminer la position et/ou l'orientation relative de la pièce (16) par rapport au support de pièce (30) et un ordinateur destiné à exécuter le procédé mis en œuvre par ordinateur selon l'une quelconque des revendications 27 et 28, dans lequel l'ordinateur comprend un progiciel (212) avec une pluralité d'applications logicielles et un logiciel d'automatisation (216), qui sont exécutés dans le processeur de l'ordinateur et les étapes virtuelles du procédé dans le logiciel d'automatisation sont mises en œuvre comme le procédé mis en œuvre par ordinateur.

X  23  Y  25  Z  20  15  25  16

25

22

26

33

60  50

21

27

**FIG 1**

32  30

31

24  35

**FIG 2**

15

20
21
34
27
36
16
F_B
32        32        32        Sp        F_S        32        32        18        16
                    h_K        h_S                        32        32

**FIG 3**

15

20
18        32
29                32    32    37
21
32        38
16
17
                32
                32
                32
                32
31    31    31    31    31        31        32

**FIG 4**

**FIG 5**

**FIG 6**

EP 3 634 689 B1

FIG 7

36

FIG 8

**FIG 9**

**FIG 10**

**FIG 11**

```
                    ┌─────────────────────┐
                    │      301, a)        │
                    └─────────────────────┘
                              │
                              ▼
                    ┌─────────────────────┐
                    │      302, b)        │
                    └─────────────────────┘
                              │
                              ▼
                    ┌─────────────────────┐◄──────────────┐
                    │      303, c)        │               │
                    └─────────────────────┘               │
                              │                            │
                              ▼                            │
      ┌──────────────────────────────────────────────┐    │
      │                 304, d)                       │    │
      │  ┌───────────────────┐  ┌──────────────────┐  │    │
      │  │       305         │  │      306         │  │    │
      │  └───────────────────┘  └──────────────────┘  │    │
      │                            │                   │    │
      │                            ▼                   │    │
      │                         ┌──────────────────┐   │    │
      │                         │      307         │   │    │
      │                         └──────────────────┘   │    │
      └──────────────────────────────────────────────┘    │
                              │                            │
                              ▼                            │
                    ┌─────────────────────┐               │
                    │       308           │               │
                    └─────────────────────┘               │
                              │                            │
                              ▼                            │
                         ◇─────────◇────────────────────────┘
                          ◇  309  ◇
                           ◇─────◇
                              │
                              ▼
                    ┌─────────────────────┐
                    │      310, e)        │
                    └─────────────────────┘
                              │
                              ▼
                    ┌─────────────────────┐◄──────┐
                    │       311           │       │
                    └─────────────────────┘       │
                              │                    │
                              ▼                    │
                    ┌─────────────────────┐        │
                    │       312           │        │
                    └─────────────────────┘        │
                              │                    │
                              ▼                    │
                    ┌─────────────────────┐        │
                    │       313           │        │
                    └─────────────────────┘        │
                              │                    │
                              ▼                    │
                         ◇─────────◇────────────────┘
                          ◇  314  ◇
                           ◇─────◇
```

**FIG 12**

a)

b)

**FIG 13**

41

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 8455787 B2
- US 9031688 B2
- DE 102014200208 B3
- WO 2016020411 A1